# EUROPEAN PATENT APPLICATION

(11) **EP 4 821 360 A1**
(43) Date of publication of application: **14.10.2026**
(21) Application number: 25461519.8
(22) Date of filing: 10.04.2025
(51) Int. Cl.: A01N 3/00, A01N 3/02, A01N 27/00, A01P 21/00, A01N 25/28, A01N 25/34, A23B 7/144

(54) **1-METHYLCYCLOPROPENE TABLETS AND USES THEREOF**

(71) Applicant: Synthex Technologies SP. Z O.O., 87-100 Torun (PL)
(72) Inventor: WOLAN, Andrzej Jan, 87-100 Torun (PL); RADLOWSKA, Roksana Katarzyna, 85-770 Bydgoszcz (PL); WYSOCKA, Malgorzata, 87-100 Torun (PL); RAKOWIECKI, Marcin, 87-100 Torun (PL); CZAJKOWSKA, Lucyna, 82-500 Kwidzyn (PL); GURANOWSKA, Katarzyna Anna, 87-162 Grebocin (PL); STANIUK, Lukasz, 87-100 Torun (PL)
(74) Representative: Kancelaria Eupatent.pl Sp. z o.o.

(57) **Abstract**

Disclosed herein are film-coated tablets including 1-methylcyclopropene for use in, e.g., preserving the freshness of plants.

## Description

### TECHNICAL FIELD

Disclosed herein are film-coated tablets comprising 1-methylcyclopropene, and use of the tablets in delaying the maturation of plants, e.g., fruits, vegetables, and flowers.

### BACKGROUND

Ethylene affects a wide range of physiological processes in plants (including fruits, vegetables, flowers, ornamental plants, herbs, seeds, nuts, fungi, and grains), such as drooping, aging and maturation, chlorophyll loss, softening, physiological disorders, germination, isocoumarin synthesis, lignification, discoloration (browning), decomposition, and stimulation of defense systems. When growing and storing plant and plant products, it is desirable to control the influence of ethylene to prolong the freshness of these products, delay their maturation, and decelerate browning and aging.

One of the methods used is to inhibit the action of ethylene by inhibiting (i.e., blocking) ethylene receptors in plant cells. 1-Methylcyclopropene (1-MCP) is a gas that has been used to block ethylene receptors in plant cells. Liquid or gaseous 1-MCP decomposes rapidly at room temperature to form dimers, oligomers, degradation products, and/or oxidation products *via* free-radical processes and therefore cannot be stored for long periods in pure form. As such, 1-MCP is typically complexed with host compounds such as, e.g., cyclodextrin, cucurbit[6]uril, and metal-organic frameworks for storage and use. When used as a complex with cyclodextrin, it is necessary to expose the complex to water (e.g., in the form of humidity) to release the 1-MCP from the cyclodextrin.

### SUMMARY

In one aspect, the invention relates to a film-coated tablet comprising: a tablet core with an acid and a base, the tablet core comprising: a plurality of microcapsules, wherein the microcapsules comprise a microcapsule core, comprising a complex of 1-methylcyclopropene and α-cyclodextrin, the acid, and an excipient; and a microcapsule layer surrounding the microcapsule core, wherein the microcapsule layer comprises a first polymer; and a base, wherein the base may be a part of the microcapsule core and may be surrounded by a coating; and a tablet layer surrounding the tablet core, wherein the tablet layer comprises a second polymer.

In a specific aspect, the base is comprised in the microcapsule core.

In a specific aspect, the base is separate from the microcapsule core.

In a specific aspect, the weight percentage of 1-methylcyclopropene in the microcapsule core can be from about 0.1% to about 4%.

In a specific aspect, the acid can be selected from the group consisting of: citric acid, tartaric acid, fumaric acid, salicylic acid, oxalic acid, succinic acid, maleic acid, malic acid, glycolic acid, glutaric acid, gluconic acid, and combinations thereof.

In a specific aspect, the acid can be citric acid.

In a specific aspect, the weight percentage of the acid in the microcapsule core can be from about 30% to about 70%.

In a specific aspect, the weight percentage of the acid in the microcapsule core can be about 31-32%.

In a specific aspect, the molar ratio of the 1-methylcyclopropene to the acid can be about 1:4 to about 1:25.

In a specific aspect, the molar ratio of the 1-methylcyclopropene to the acid can be about 1:11.

In a specific aspect, the base can be selected from the group consisting of: sodium bicarbonate, potassium bicarbonate, calcium carbonate, sodium carbonate, potassium carbonate, sodium glycine carbonate, sodium potassium carbonate, and combinations thereof.

In a specific aspect, the base can be sodium bicarbonate.

In a specific aspect, the molar ratio of the acid to the base can be about 3:1 to about 1:4.

In a specific aspect, the molar ratio of the acid to the base can be about 1:2-1:3.

In a specific aspect, the coating may comprise a hydroxyalkyl cellulose, poly(ethylene glycol), polyvinylpyrrolidone, polyvinylpolypyrrolidone, polyvinylpolypyrrolidone, polyvinyl alcohol, polyacrylic acid, a polyacrylamide, N-(2-hydroxypropyl)methacrylamide, divinyl ether-maleic anhydride, polyoxazoline, a polyphosphate, a polyphosphazene, xanthan gum, a pectin, a dextran, carrageenan, sodium carboxymethylcellulose, sodium croscarmellose, hyaluronic acid, albumin, or combinations thereof.

In a specific aspect, the coating may comprise hydroxypropyl cellulose.

In a specific aspect, the excipient can be selected from the group consisting of: a hydroxyalkylcellulose (e.g., hydroxyethylcellulose, hydroxypropyl cellulose), magnesium stearate, sodium citrate, dicalcium phosphate, a starch, lactose, sucrose, glucose, mannitol, silicic acid, carboxymethylcellulose, an alginate, gelatin, polyvinylpyrrolidone, polyvinylpolypyrrolidone, sodium croscarmellose, acacia, calcium carbonate, alginic acid, silicate, sodium carbonate, kaolin, bentonite clay, talc, calcium stearate, a polyethylene glycol, and combinations thereof.

In a specific aspect, the excipient can be a combination of hydroxyethylcellulose and magnesium stearate.

In a specific aspect, the weight percentage of the excipient in the microcapsule core is from about 2% to about 15%.

In a specific aspect, the weight percentage of the excipient in the microcapsule core is about 5%.

In a specific aspect, the first polymer can be water soluble.

In a specific aspect, the first polymer can be selected from the group consisting of: a hydroxyalkyl cellulose (e.g., hydroxyethylcellulose, hydroxypropyl cellulose), poly(ethylene glycol), polyvinylpyrrolidone, polyvinylpolypyrrolidone, polyvinylpolypyrrolidone, polyvinyl alcohol, polyacrylic acid, a polyacrylamide, N-(2-hydroxypropyl)methacrylamide, divinyl ether-maleic anhydride, polyoxazoline, a polyphosphate, a polyphosphazene, xanthan gum, a pectin, a dextran, carrageenan, sodium carboxymethylcellulose, sodium croscarmellose, hyaluronic acid, albumin, and combinations thereof.

In a specific aspect, the first polymer can be hydroxypropyl cellulose.

In a specific aspect, the second polymer can be water soluble.

In a specific aspect, the second polymer can be selected from the group consisting of: a hydroxyalkyl cellulose (e.g., hydroxyethylcellulose, hydroxypropyl cellulose), poly(ethylene glycol), polyvinylpyrrolidone, polyvinylpolypyrrolidone, polyvinyl alcohol, polyacrylic acid, a polyacrylamide, N-(2-hydroxypropyl)methacrylamide, divinyl ether-maleic anhydride, polyoxazoline, a polyphosphate, a polyphosphazene, xanthan gum, a pectin, a dextran, carrageenan, sodium carboxymethylcellulose, sodium croscarmellose, hyaluronic acid, albumin, and combinations thereof.

In a specific aspect, the second polymer can be hydroxypropyl cellulose.

In a specific aspect, the weight percentage of the second polymer in the film-coated tablet can be about 2% to about 3%.

In a specific aspect, the thickness of the tablet layer can be from about 0.01 mm to about 0.5 mm.

In a specific aspect, the thickness of the tablet layer can be about 0.1 mm.

In a specific aspect, the film-coated tablet can be capable of releasing the 1-methylcyclopropene in the form of a gas when exposed to water, the tablet having a release profile characterized in that when exposed to water, the tablet releases substantially no 1-methylcyclopropene after a first time period of at least 1 minute after exposure to the water; and the film-coated tablet releases 1-methylcyclopropene over a second time period that starts after the first time period, wherein the second time period is about 120 minutes.

In another aspect, the invention relates to a method of inhibiting an ethylene response in a plant, comprising: contacting the film-coated tablet as described herein with water to release gaseous 1-methylcyclopropene; and contacting the 1-methylcyclopropene with the plant.

In yet another aspect, the invention relates to a method of preserving the freshness of a plant, comprising: contacting the film-coated tablet as described herein with water to release gaseous 1-methylcyclopropene; and contacting the 1-methylcyclopropene with the plant.

In a further aspect, the invention relates to a method of preserving the freshness of a plant, comprising: placing the plant inside an enclosed space; and contacting the film-coated tablet as described herein with water inside the enclosed space.

In another aspect, the plant can be a fruit or vegetable.

In another aspect, the plant can be a flower cut at the stem.

In another aspect, the plant can be planted in a pot.

When used as a complex with cyclodextrin, 1-MCP starts rapidly releasing its 1-MCP upon contact with water. This poses a challenge in practical contexts in which a delayed and more controlled release is desired, such as in, e.g., a room, chamber, or vessel (e.g., a storage facility or a vehicle such as a shipping truck) where fruits, vegetables, flowers, and other plants are stored for later use. The film-coated tablets disclosed herein provide a convenient, modular, and stable dosage form of 1-MCP that can be easily packaged and stored until ready for use that protects the 1-MCP in an inert matrix encapsulated in an airtight film that prevents decomposition of the 1-MCP. When exposed to water, the film-coated tablets release substantially no 1-methylcyclopropene after a first time period of at least 1 minute after exposure to the water, and releases 1-methylcyclopropene over a second time period that starts after the first time period, wherein the second time period is at least 60 minutes. This, for example, allows a person to contact the tablet with water (such as immerse it in water inside an open container such as a bucket) in a room, chamber, or vessel containing plants, then exit the room before the tablet begins to release 1-MCP, thus enabling the person to avoid exposure to the 1-MCP.

Unless defined otherwise, all technical and scientific terms used herein have the same meaning as is commonly understood by one of ordinary skill in the art. In the event that there are a plurality of definitions for a term herein, those in this section prevail unless stated otherwise.

As used herein, the terms "about" and "approximately" are used interchangeably, and when used to refer to modify a numerical value, encompass a range of uncertainty of the numerical value of from 0% to 10% of the numerical value.

As used herein, the singular forms "a," "an," and "the" include plural referents unless the context clearly dictates otherwise.

For purposes of clarification, it is understood that "when exposed to water, the tablet releases substantially no 1-methylcyclopropene" means that little to none (e.g., less than 10%, less than 9%, less than 8%, less than 7%, less than 6%, less than 5%, less than 4%, less than 3%, less than 2%, less than 1%, less than 0.5%, less than 0.2%, less than 0.1%, less than 0.05%, less than 0.02%, or less than 0.01%) of the 1-methylcyclopropene present in the tablet (as measured by gas chromatography (GC) using cis-2-butene as an internal standard) is released from the tablet after the defined time period (for example, after at least 1 minute or after at least 2 minutes) after exposure to or contact with water. The amount of 1-MCP released is measured by GC using cis-2-butene as an internal standard.

For purposes of clarification, it is understood that "the concentration of the 1-methylcyclopropene in the film-coated tablet does not change substantially after at least 10 days" means that little to no change (e.g., less than 10%, less than 9%, less than 8%, less than 7%, less than 6%, less than 5%, less than 4%, less than 3%, less than 2%, less than 1%, less than 0.5%, less than 0.2%, less than 0.1%, less than 0.05%, less than 0.02%, or less than 0.01% change) in the concentration of the 1-methylcyclopropene in the film-coated tablet occurs or has occurred at least 10 days after an initial measurement of the concentration is taken, wherein the initial measurement is taken within 30 days or less (e.g., 25 days or less, 20 days or less, 14 days or less, 10 days or less, 7 days or less, 5 days or less, 3 days or less, 2 days or less, 1 day or less, 18 hours or less, 12 hours or less, or 6 hours or less) after preparation of the film-coated tablet. The concentration of 1-MCP (e.g., the initial measurement and a measurement taken after at least ten days after the initial measurement of the molar concentration of 1-MCP) is measured by gas chromatography (GC) using cis-2-butene as an internal standard. Further, (i) the amount of internal standard included in each measured sample is the same, and (ii) the volume of sample injected into the gas chromatograph in each measurement is the same.

As used herein, when used to refer to modify a numerical value, the term "about" encompasses a range of uncertainty of the numerical value of from 0% to 10% of the numerical value.

The details of one or more embodiments of the invention are set forth in the accompanying drawings and the description below. Other features, objects, and advantages of the invention will be apparent from the description and drawings, and from the claims.

### DESCRIPTION OF DRAWINGS

The invention is described with reference to accompanying drawings, wherein:
FIG. 1 is a plot of the weight percentage of 1-MCP in the 1-MCP/α-cyclodextrin complex present in an uncoated tablet and a film-coated tablet over time.
FIG. 2 is a plot of the total percentage of 1-MCP released from the film-coated tablet vs. time.

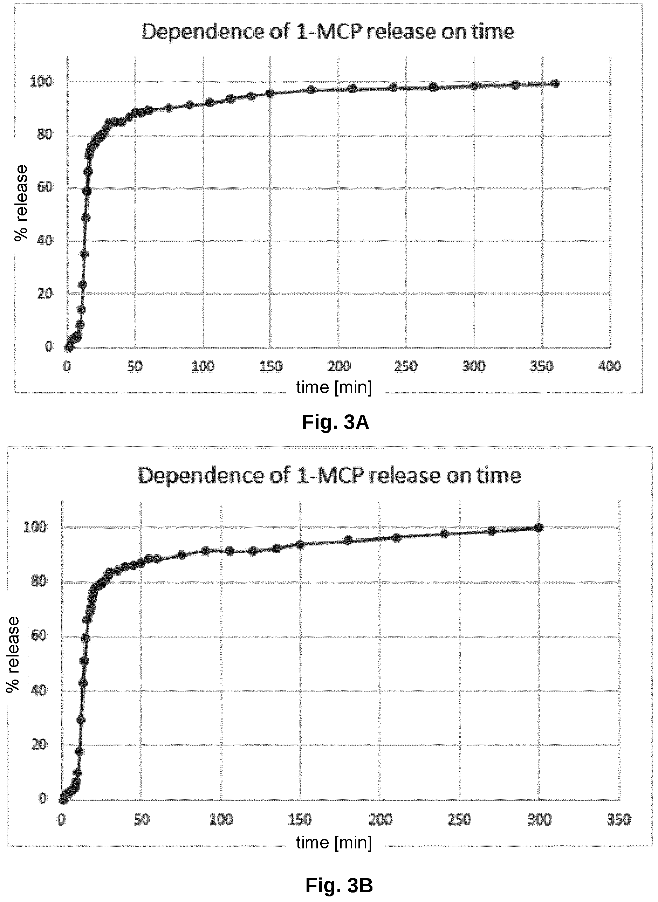

FIG. 3A is a plot of the total percentage of 1-MCP released from Sample 5A vs. time. After 6 hours, 100% of the 1-MCP in the tablet had been released.
FIG. 3B is a plot of the total percentage of 1-MCP released from Sample 5B vs. time. After 5 hours, 100% of the 1-MCP in the tablet had been released.

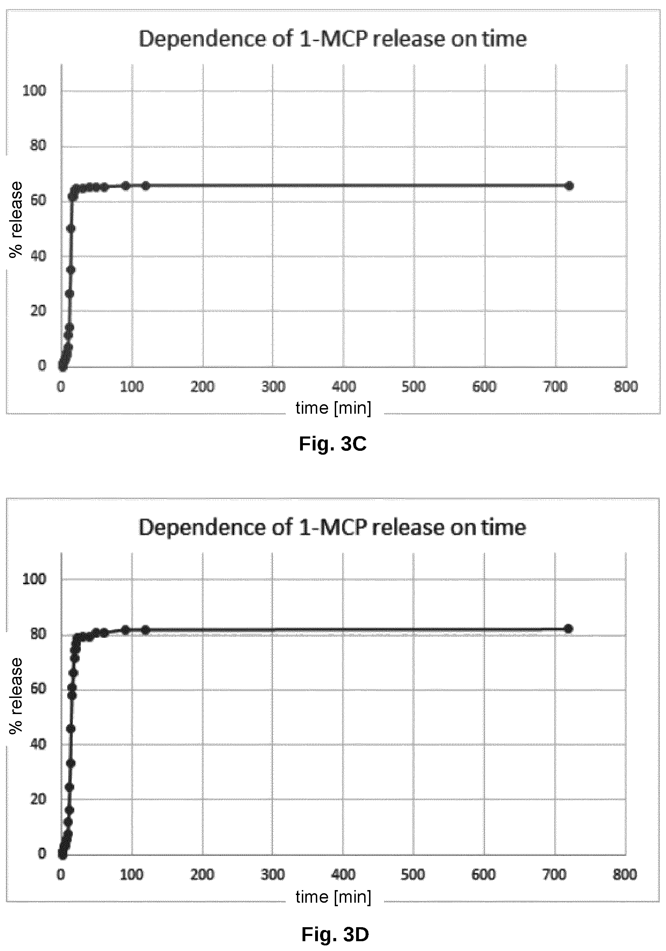

FIG. 3C is a plot of the total percentage of 1-MCP released from Sample 5C vs. time. After 12 hours, 66% of the 1-MCP in the tablet had been released.
FIG. 3D is a plot of the total percentage of 1-MCP released from Sample 5D vs. time. After 12 hours, 82% of the 1-MCP in the tablet had been released.

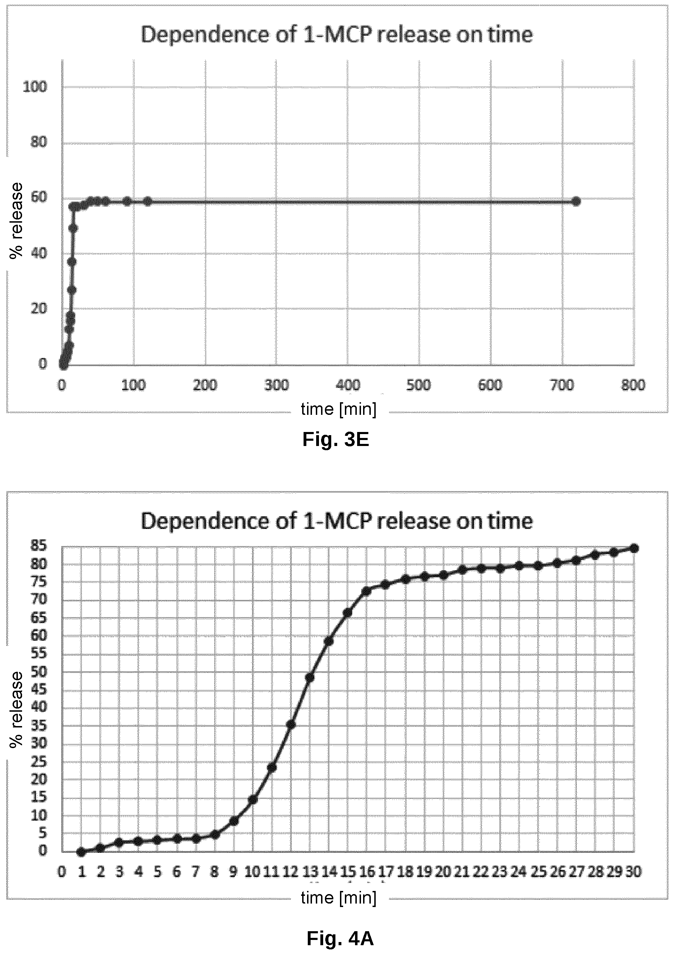

FIG. 3E is a plot of the total percentage of 1-MCP released from Sample 5E vs. time. After 12 hours, 59% of the 1-MCP in the tablet had been released.
FIG. 4A is a plot of the total percentage of 1-MCP released from Sample 5A vs. time for the first 30 minutes after addition to water.

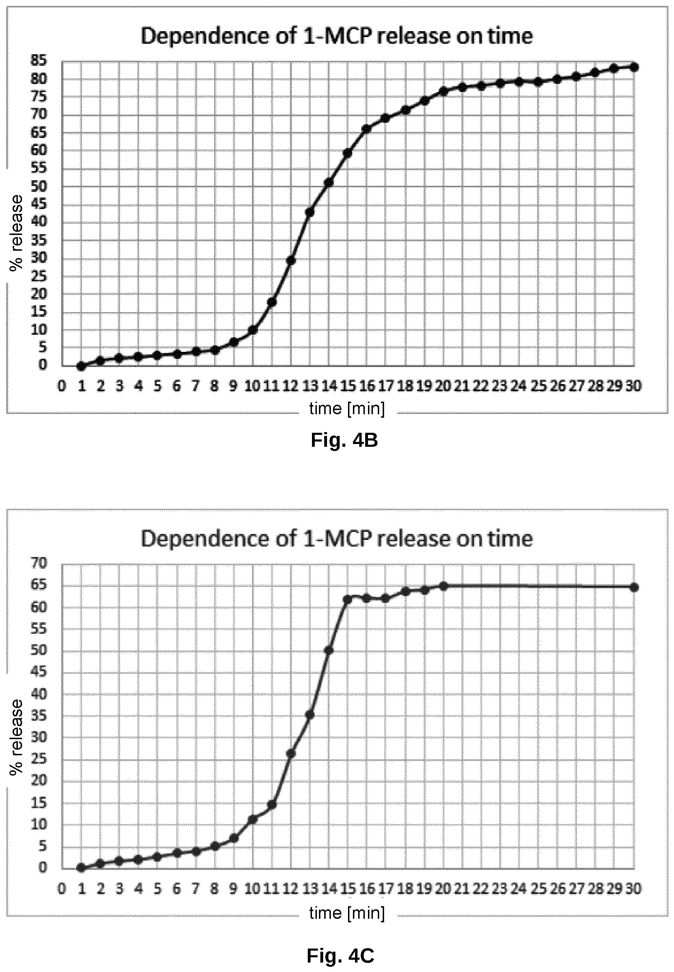

FIG. 4B is a plot of the total percentage of 1-MCP released from Sample 5B vs. time for the first 30 minutes after addition to water.
FIG. 4C is a plot of the total percentage of 1-MCP released from Sample 5C vs. time for the first 30 minutes after addition to water.
FIG. 4D is a plot of the total percentage of 1-MCP released from Sample 5D vs. time for the first 30 minutes after addition to water.
FIG. 4E is a plot of the total percentage of 1-MCP released from Sample 5E vs. time for the first 30 minutes after addition to water.
Fig. 5A is a plot of a release profile of Example 6 tablet.
Fig. 5B is a plot of a release profile of Example 6 tablet during the first 30 minutes of release.
Fig. 6A is a plot of a release profile of Example 7 tablet.
Fig. 6B is a plot of a release profile of Example 7 tablet during the first 30 minutes of release.
Fig. 7A is a plot of a release profile of Example 8 tablet.
Fig. 7B is a plot of a release profile of Example 8 tablet during the first 30 minutes of release.
Fig. 8A is a plot of a release profile of Example 9 tablet.
Fig. 8B is a plot of a release profile of Example 9 tablet during the first 30 minutes of release.
Fig. 9A is a plot of a release profile of Example 9 tablet 1.
Fig. 9B is a plot of a release profile of Example 9 tablet 1 during the first 30 minutes of release.
Fig. 9C is a plot of a release profile of Example 9 tablet 2.
Fig. 9D is a plot of a release profile of Example 9 tablet 2 during the first 30 minutes of release.
Fig. 10A is a plot of a release profile of Example 10 tablet.
Fig. 10B is a plot of a release profile of Example 10 tablet during the first 30 minutes of release.

Like reference symbols in the various drawings indicate like elements.

### DETAILED DESCRIPTION

Disclosed herein are film-coated tablets containing 1-methylcyclopropene (1-MCP) as a convenient means to stably store and release 1-MCP with a time delay.

It is understood that the film that coats the tablet advantageously delays the onset of 1-MCP release. This can, for example, enable a person to exit and/or seal or close off an enclosed space such as a room, truck, box, or warehouse before the 1-MCP in the tablet begins releasing. Once the water penetrates the film and permeates the tablet core, the acid and base in the tablet core start to dissolve and undergo an acid-base reaction, which promotes/assists continued dissolution of the tablet and contact of water with the 1-MCP complex throughout the tablet. When the base is a carbonate base, carbon dioxide is released, which produces effervescence that enhances or increases the rate of dissolution of the tablet and release of the 1-MCP.

Disclosed herein is a film-coated tablet comprising a tablet core and a tablet layer. In some embodiments, the tablet core comprises a plurality of microcapsules. In some embodiments, the microcapsule comprises a microcapsule core surrounded by a microcapsule layer. In some embodiments, the microcapsule core comprises a complex of 1-methylcyclopropene and α-cyclodextrin, an acid, and an excipient. In some embodiments, the microcapsule core comprises a complex of 1-methylcyclopropene and α-cyclodextrin, an acid, a base and an excipient. In some embodiments, the tablet core comprises a plurality of microcapsules and a base surrounded by a coating. In some embodiments, the microcapsule layer comprises a first polymer. In some embodiments, the tablet layer surrounds the tablet core. In some embodiments, the tablet layer comprises a second polymer.

Some embodiments provide a microcapsule, comprising:
(a) a microcapsule core, comprising:
   a complex of 1-methylcyclopropene and α-cyclodextrin;
   an acid; and
   an excipient; and
(b) a microcapsule layer surrounding the microcapsule core, wherein the microcapsule layer comprises a first polymer.

In some embodiments, the microcapsule core comprises a base.

Some embodiments provide a microcapsule, comprising:
(a) a microcapsule core, comprising:
   a complex of 1-methylcyclopropene and α-cyclodextrin;
   an acid;
   a base; and
   an excipient; and
(b) a microcapsule layer surrounding the microcapsule core, wherein the microcapsule layer comprises a first polymer.

In some embodiments, the weight percentage of 1-methylcyclopropene in the complex of 1-methylcyclopropene and α-cyclodextrin is about 1% to about 5%, for example, about 1% to about 3%, about 3% to about 5%, about 2% to about 4%, about 3% to about 4%, about 3%, about 3.1%, about 3.2%, about 3.3%, about 3.4%, about 3.5%, about 3.6%, about 3.7%, about 3.8%, about 3.9%, or about 4%.

In some embodiments, the weight percentage of 1-methylcyclopropene in the microcapsule core is from about 0.1% to about 10% (e.g., about 0.1% to about 7%, about 0.1% to about 5%, about 0.1% to about 4%, about 0.1% to about 3%, about 0.1% to about 2%, about 0.1% to about 1.5%, about 0.1% to about 1%, about 0.5% to about 4%, about 0.7% to about 3%, about 0.7% to about 2%, about 1% to about 2%, about 0.1% to about 1.5%, about 0.4% to about 1.4%, about 0.5% to about 1.1%, about 0.5%, about 0.6%, about 0.7%, about 0.8%, about 0.9%, about 1%, about 1.1%, about 1.2%, about 1.3%, about 1.4%, about 0.82%). **In** some embodiments, the weight percentage of **1-**methylcyclopropene in the microcapsule core is from about 0.5% to about 1.1%. **In** some embodiments, the weight percentage of 1-methylcyclopropene in the microcapsule core is from about 0.5% to about 4%. **In** some embodiments, the weight percentage of **1-**methylcyclopropene in the microcapsule core is about 0.7% to about 2%, **In** some embodiments, the weight percentage of 1-methylcyclopropene in the microcapsule core is about 0.82%. In some embodiments, the weight percentage of 1-methylcyclopropene in the microcapsule core is about 1.3%.

In some embodiments, the acid is selected from the group consisting of: citric acid, tartaric acid, fumaric acid, salicylic acid, oxalic acid, succinic acid, maleic acid, malic acid, glycolic acid, glutaric acid, gluconic acid, and combinations thereof. In some embodiments, the acid is citric acid. In some embodiments, the citric acid is anhydrous citric acid.

In some embodiments, the weight percentage of the acid in the microcapsule core is from about 1% to about 70% (e.g., about 1% to about 60%, about 1% to about 50%, about 1% to about 40%, about 1% to about 30%, about 1% to about 20%, about 10% to about 60%, about 10% to about 50%, about 10% to about 40%, about 10% to about 30%, about 20% to about 60%, about 20% to about 50%, about 30% to about 70%, about 20% to about 40%, about 25% to about 40%, about 25% to about 60%, about 50% to about 65%, about 50% to about 60%, about 50% to about 56%, about 48% to about 58%, about 27% to about 40%, about 29% to about 38%, about 30%, about 31%, about 32%, about 33%, about 34%, about 35%, about 36%, or about 33.6%). In some embodiments, the weight percentage of the acid in the microcapsule core is from about 27% to about 40%. In some embodiments, the weight percentage of the acid in the microcapsule core is from about 30% to about 70%. In some embodiments, the weight percentage of the acid in the microcapsule core is from about 48% to about 58%. In some embodiments, the weight percentage of the acid in the microcapsule core is about 31.65%. In some embodiments, the weight percentage of the acid in the microcapsule core is about 53%.

In some embodiments, the molar ratio of the 1-methylcyclopropene to the acid is about 1:1 to about 1:100 (e.g., about 1:1 to about 1:100, about 1:1 to about 1:80, about 1:1 to about 1:60, about 1:1 to about 1:40, about 1:1 to about 1:30, about 1:1 to about 1:25, about 1:1 to about 1:20, about 1:1 to about 1:15, about 1:1 to about 1:10, about 1:1 to about 1:5, about 1:1 to about 1:4, about 1:1 to about 1:3, about 1:1 to about 1:2, about 1:2 to about 1:100, about 1:2 to about 1:80, about 1:2 to about 1:60, about 1:2 to about 1:40, about 1:2 to about 1:30, about 1:2 to about 1:25, about 1:2 to about 1:20, about 1:2 to about 1:25, about 1:2 to about 1:20, about 1:2 to about 1:5, about 1:2 to about 1:4, about 1:2 to about 1:3, about 1:3 to about 1:100, about 1:3 to about 1:80, about 1:3 to about 1:60, about 1:3 to about 1:40, about 1:3 to about 1:30, about 1:3 to about 1:25, about 1:3 to about 1:20, about 1:3 to about 1:35, about 1:3 to about 1:30, about 1:3 to about 1:5, about 1:3 to about 1:4, about 1:4 to about 1:100, about 1:4 to about 1:80, about 1:4 to about 1:60, about 1:4 to about 1:40, about 1:4 to about 1:30, about 1:4 to about 1:25, about 1:4 to about 1:20, about 1:4 to about 1:45, about 1:4 to about 1:40, about 1:4 to about 1:5, about 1:6 to about 1:15, about 1:8 to about 1:20, about 1:9 to about 1:14, about 1:10 to about 1:12, about 1:4 to about 1:25, about 1:4, about 1:5, about 1:6, about 1:7, about 1:8, about 1:9, about 1:10, about 1:11, about 1:12, about 1:13, about 1:14, about 1:15, or about 1:11.5). In some embodiments, the molar ratio of the 1-methylcyclopropene to the acid is about 1:4 to about 1:25. In some embodiments, the molar ratio of the 1-methylcyclopropene to the acid is about 1:11.

In some embodiments, the base is selected from the group consisting of: sodium bicarbonate, potassium bicarbonate, calcium carbonate, sodium carbonate, potassium carbonate, sodium glycine carbonate, sodium potassium carbonate, and combinations thereof. In some embodiments, the base is sodium bicarbonate.

In some embodiments, the weight percentage of the base in the microcapsule core is from about 1% to about 70% (e.g., about 1% to about 60%, about 1% to about 50%, about 1% to about 40%, about 1% to about 30%, about 1% to about 20%, about 10% to about 60%, about 10% to about 50%, about 10% to about 40%, about 10% to about 30%, about 20% to about 60%, about 20% to about 50%, about 20% to about 40%, about 25% to about 40%, about 28% to about 47%, about 27% to about 40%, about 29% to about 38%, about 30%, about 31%, about 32%, about 33%, about 34%, about 35%, about 36%, about 36.6%, about 37%, about 38%, about 39%, or about 40%). In some embodiments, the weight percentage of the base in the microcapsule core is from about 28% to about 47%. In some embodiments, the weight percentage of the base in the microcapsule core is about 37%.

In some embodiments, the molar ratio of the acid to the base is about 10:1 to about 1:10 (e.g., about 10:1 to about 5:1, about 5:1 to about 3:1, about 3:1 to about 1:1, about 1:1 to about 3:1, about 3:1 to about 5:1, about 5:1 to about 10:1, about 5:1 to about 1:5, about 4:1 to about 1:4, about 2:1 to about 1:4, about 1:1 to about 1:4, about 1:1 to about 1:4, about 1:2 to about 1:4, about 1:2 to about 1:3, about 3:1 to about 1:4, about 1:1, about 1:1.5, about 1:2, about 1:2.5, about 1:3, or about 1:4). In some embodiments, the molar ratio of the acid to the base is about 3:1 to about 1:4. In some embodiments, the molar ratio of the acid to the base is about 1:2.7.

In some embodiments, the excipient is selected from a hydroxyalkylcellulose (e.g., hydroxyethylcellulose), magnesium stearate, sodium citrate, dicalcium phosphate, a starch, lactose, sucrose, glucose, mannitol, silicic acid, carboxymethylcellulose, an alginate, gelatin, polyvinylpyrrolidone, acacia, calcium carbonate, alginic acid, silicate, sodium carbonate, kaolin, bentonite clay, talc, calcium stearate, a polyethylene glycol, or any combination thereof. In some embodiments, the excipient comprises hydroxyethylcellulose and magnesium stearate. In some embodiments, the excipient is selected from the group consisting of: hydroxyethylcellulose, magnesium stearate, sodium citrate, dicalcium phosphate, a starch, lactose, sucrose, glucose, mannitol, silicic acid, carboxymethylcellulose, an alginate, gelatin, polyvinylpyrrolidone, acacia, calcium carbonate, alginic acid, silicate, sodium carbonate, kaolin, bentonite clay, talc, calcium stearate, a polyethylene glycol, sodium croscarmellose, and combinations thereof. In some embodiments, the hydroxyalkylcellulose is hydroxyethylcellulose. In some embodiments, the excipient is hydroxyethylcellulose and magnesium stearate. In some embodiments, the excipient is a combination of hydroxyethylcellulose and magnesium stearate. In some embodiments, the excipient is a combination of hydroxyethylcellulose and magnesium stearate in an about 1:3 to about 2:1 ratio by weight (e.g., a 2:3 ratio by weight).

In some embodiments, the weight percentage of the excipient in the microcapsule core is from about 0.5 % to about 95% (e.g., about 1% to about 95%, about 1% to about 90%, about 5% to about 90%, about 1% to about 80%, about 1% to about 70%, about 1% to about 60%, about 1% to about 50%, about 1% to about 40%, about 1% to about 30%, about 1% to about 25%, about 1% to about 20%, about 1% to about 15%, about 1% to about 10%, about 2% to about 10%, about 2% to about 13%, about 2% to about 8%, about 2% to about 7%, about 3% to about 7%, about 4% to about 6%, about 2% to about 15%, about 1%, about 2%, about 3%, about 4%, about 5%, about 6%, about 7%, about 8%, about 9%, or about 10%). In some embodiments, the weight percentage of the excipient in the microcapsule core is from about 2% to about 15%. In some embodiments, the weight percentage of the excipient in the microcapsule core is about 5%. In some embodiments, the weight percentage of the excipient in the microcapsule core is about 8%.

In some embodiments, the first polymer is water soluble. In some embodiments, the first polymer is selected from the group consisting of: a hydroxyalkyl cellulose (e.g., hydroxyethylcellulose, hydroxypropyl cellulose), poly(ethylene glycol), polyvinylpyrrolidone, polyvinylpolypyrrolidone, polyvinyl alcohol, polyacrylic acid, a polyacrylamide, N-(2-hydroxypropyl)methacrylamide, divinyl ether-maleic anhydride, polyoxazoline, a polyphosphate, a polyphosphazene, xanthan gum, a pectin, a dextran, carrageenan, sodium carboxymethylcellulose, sodium croscarmellose, hyaluronic acid, albumin, and combinations thereof. In some embodiments, the hydroxyalkyl cellulose is hydroxyethyl cellulose. In some embodiments, the hydroxyalkyl cellulose is hydroxypropyl cellulose. In some embodiments, the first polymer comprises hydroxypropyl cellulose, poly(ethylene glycol), polyvinylpyrrolidone, polyvinylpolypyrrolidone, polyvinyl alcohol, polyacrylic acid, a polyacrylamide, N-(2-hydroxypropyl)methacrylamide, divinyl ether-maleic anhydride, polyoxazoline, a polyphosphate, a polyphosphazene, xanthan gum, a pectin, a dextran, carrageenan, sodium carboxymethylcellulose, sodium croscarmellose, hyaluronic acid, albumin or any combination thereof. In some embodiments, the first polymer comprises hydroxpropyl cellulose. In some embodiments, the first polymer is a hydroxyalkyl cellulose. In some embodiments, the first polymer is hydroxypropyl cellulose.

In some embodiments, the microcapsules have a size of about 1 to about 250 microns (e.g., about 1 to about 1000 microns, about 1 to about 750 microns, about 1 to about 500 microns, about 1 to about 350 microns, about 1 to about 300 microns, about 40 to about 300 microns, about 40 to about 100 microns, about 100 to about 200 microns, about 200 to about 300 microns, about 300 to about 400 microns, about 50 to about 150 microns, about 150 to about 250 microns, about 10 to about 50 microns, or about 50 to about 250 microns). In some embodiments, the microcapsules have a size of about 50 to about 250 microns.

Some embodiments provide a film-coated tablet comprising:
(a) a tablet core comprising a plurality of microcapsules; and
(b) a tablet layer surrounding the tablet core, wherein the tablet layer comprises a second polymer.

Some embodiments provide a film-coated tablet comprising:
(a) a tablet core comprising a plurality of microcapsules, wherein the microcapsules comprise:
   (i) a microcapsule core, comprising:
      a complex of 1-methylcyclopropene and α-cyclodextrin;
      an acid;
      a base; and
      an excipient; and
   (ii) a microcapsule layer surrounding the microcapsule core, wherein the microcapsule layer comprises a first polymer; and
(b) a tablet layer surrounding the tablet core, wherein the tablet layer comprises a second polymer.

Some embodiments provide a film-coated tablet comprising:
(a) a tablet core comprising:
   a plurality of microcapsules, wherein the microcapsules comprise
      (i) a microcapsule core, comprising a complex of 1-methylcyclopropene and α-cyclodextrin, an acid, and an excipient; and
      (ii) a microcapsule layer surrounding the microcapsule core, wherein the microcapsule layer comprises a first polymer; and
   a base surrounded by a coating; and
(b) a tablet layer surrounding the tablet core, wherein the tablet layer comprises a second polymer.

In some embodiments, the coating is selected from the group consisting of: a hydroxyalkyl cellulose (e.g., hydroxyethylcellulose, hydroxypropyl cellulose), poly(ethylene glycol), polyvinylpyrrolidone, polyvinylpolypyrrolidone, polyvinylpolypyrrolidone, polyvinyl alcohol, polyacrylic acid, a polyacrylamide, N-(2-hydroxypropyl)methacrylamide, divinyl ether-maleic anhydride, polyoxazoline, a polyphosphate, a polyphosphazene, xanthan gum, a pectin, a dextran, carrageenan, sodium carboxymethylcellulose, sodium croscarmellose, hyaluronic acid, albumin, and combinations thereof. In some embodiments, the hydroxyalkyl cellulose is hydroxyethyl cellulose. In some embodiments, the hydroxyalkyl cellulose is hydroxypropyl cellulose. In some embodiments, the coating comprises hydroxypropyl cellulose, poly(ethylene glycol), polyvinylpyrrolidone, polyvinylpolypyrrolidone, polyvinylpolypyrrolidone, polyvinyl alcohol, polyacrylic acid, a polyacrylamide, N-(2-hydroxypropyl)methacrylamide, divinyl ether-maleic anhydride, polyoxazoline, a polyphosphate, a polyphosphazene, xanthan gum, a pectin, a dextran, carrageenan, sodium carboxymethylcellulose, sodium croscarmellose, hyaluronic acid, albumin or any combination thereof. In some embodiments, the coating comprises hydroxpropyl cellulose. In some embodiments, the coating comprises hydroxyethyl cellulose. In some embodiments, the coating is a hydroxyalkyl cellulose. In some embodiments, the coating is hydroxypropyl cellulose.

In some embodiments, the second polymer is water soluble. In some embodiments, the second polymer is selected from the group consisting of: a hydroxyalkyl cellulose (e.g., hydroxyethylcellulose, hydroxypropyl cellulose), poly(ethylene glycol), polyvinylpyrrolidone, polyvinylpolypyrrolidone, polyvinylpolypyrrolidone, polyvinyl alcohol, polyacrylic acid, a polyacrylamide, N-(2-hydroxypropyl)methacrylamide, divinyl ether-maleic anhydride, polyoxazoline, a polyphosphate, a polyphosphazene, xanthan gum, a pectin, a dextran, carrageenan, sodium carboxymethylcellulose, sodium croscarmellose, hyaluronic acid, albumin, and combinations thereof. In some embodiments, the hydroxyalkyl cellulose is hydroxyethyl cellulose. In some embodiments, the hydroxyalkyl cellulose is hydroxypropyl cellulose. In some embodiments, the second polymer comprises hydroxypropyl cellulose, poly(ethylene glycol), polyvinylpyrrolidone, polyvinylpolypyrrolidone, polyvinylpolypyrrolidone, polyvinyl alcohol, polyacrylic acid, a polyacrylamide, N-(2-hydroxypropyl)methacrylamide, divinyl ether-maleic anhydride, polyoxazoline, a polyphosphate, a polyphosphazene, xanthan gum, a pectin, a dextran, carrageenan, sodium carboxymethylcellulose, sodium croscarmellose, hyaluronic acid, albumin or any combination thereof. In some embodiments, the second polymer comprises hydroxypropyl cellulose. In some embodiments, the second polymer is a hydroxyalkyl cellulose. In some embodiments, the second polymer is hydroxypropyl cellulose.

In some embodiments, the weight percentage of 1-methylcyclopropene in the microcapsule core is from about 0.1% to about 10% (e.g., about 0.1% to about 7%, about 0.1% to about 5%, about 0.1% to about 4%, about 0.1% to about 3%, about 0.1% to about 2%, about 0.1% to about 1.5%, about 0.1% to about 1%, about 0.5% to about 4%, about 0.7% to about 3%, about 0.7% to about 2%, about 1% to about 2%, about 0.1% to about 1.5%, about 0.4% to about 1.4%, about 0.5% to about 1.1%, about 0.5%, about 0.6%, about 0.7%, about 0.8%, about 0.9%, about 1%, about 1.1%, about 1.2%, about 1.3%, about 1.4%, about 0.82%). In some embodiments, the weight percentage of 1-methylcyclopropene in the base-containing tablet core is from about 0.5% to about 1.1%. In some embodiments, the weight percentage of 1-methylcyclopropene in the base-containing tablet core is about 0.7% to about 2%, In some embodiments, the weight percentage of 1-methylcyclopropene in the base-containing tablet core is about 0.82%. In some embodiments, the weight percentage of 1-methylcyclopropene in the base-containing tablet core is about 1.3%.

In some embodiments, the weight percentage of the acid in the tablet core is from about 1% to about 70% (e.g., about 1% to about 60%, about 1% to about 50%, about 1% to about 40%, about 1% to about 30%, about 1% to about 20%, about 10% to about 60%, about 10% to about 50%, about 10% to about 40%, about 10% to about 30%, about 20% to about 60%, about 20% to about 50%, about 20% to about 40%, about 25% to about 40%, about 25% to about 60%, about 50% to about 65%, about 50% to about 60%, about 50% to about 56%, about 48% to about 58%, about 27% to about 40%, about 29% to about 38%, about 30%, about 31%, about 32%, about 33%, about 34%, about 35%, about 36%, or about 33.6%). In some embodiments, the weight percentage of the acid in the tablet core is from about 27% to about 40%. In some embodiments, the weight percentage of the acid in the tablet core is from about 48% to about 58%. In some embodiments, the weight percentage of the acid in the tablet core is about 31.65%. In some embodiments, the weight percentage of the acid in the tablet core is about 53%.

In some embodiments, the weight percentage of the base in the tablet core is from about 1% to about 70% (e.g., about 1% to about 60%, about 1% to about 50%, about 1% to about 40%, about 1% to about 30%, about 1% to about 20%, about 10% to about 60%, about 10% to about 50%, about 10% to about 40%, about 10% to about 30%, about 20% to about 60%, about 20% to about 50%, about 20% to about 40%, about 25% to about 40%, about 28% to about 47%, about 27% to about 40%, about 29% to about 38%, about 30%, about 31%, about 32%, about 33%, about 34%, about 35%, about 36%, about 36.6%, about 37%, about 38%, about 39%, or about 40%). In some embodiments, the weight percentage of the base in the tablet core is from about 28% to about 47%. In some embodiments, the weight percentage of the base in the tablet core is about 36.6%.

In some embodiments, the weight percentage of the excipient in the tablet core is from about 0.5 % to about 95% (e.g., about 1% to about 95%, about 1% to about 90%, about 5% to about 90%, about 1% to about 80%, about 1% to about 70%, about 1% to about 60%, about 1% to about 50%, about 1% to about 40%, about 1% to about 30%, about 1% to about 25%, about 1% to about 20%, about 1% to about 15%, about 1% to about 10%, about 2% to about 10%, about 2% to about 13%, about 2% to about 8%, about 2% to about 7%, about 3% to about 7%, about 4% to about 6%, about 2% to about 15%, about 1%, about 2%, about 3%, about 4%, about 5%, about 6%, about 7%, about 8%, about 9%, or about 10%). In some embodiments, the weight percentage of the excipient in the tablet core is from about 2% to about 15%. In some embodiments, the weight percentage of the excipient in the tablet core is about 5%. In some embodiments, the weight percentage of the excipient in the tablet core is about 8%.

In some embodiments, the weight percentage of the first polymer in the film-coated tablet is about 0.1% to about 10% (e.g., about 0.1% to about 8%, about 0.1% to about 6%, about 0.1% to about 5%, about 0.1% to about 4%, about 0.1% to about 3%, about 0.1% to about 2%, about 0.1% to about 1%, about 1% to about 8%, about 1% to about 6%, about 1% to about 5%, about 1% to about 4%, about 1% to about 3%, about 1% to about 2%, about 2% to about 8%, about 2% to about 6%, about 2% to about 5%, about 2% to about 4%, about 2% to about 3%, about 2.5% to about 3.5%, about 0.1%, about 0.5%, about 1%, about 1.5%, about 2%, about 2.5%, about 3%, or about 4%). In some embodiments, the weight percentage of the first polymer in the film-coated tablet is about 2% to about 3%. In some embodiments, the weight percentage of the first polymer in the film-coated tablet is about 2% to about 4%. In some embodiments, the weight percentage of the first polymer in the film-coated tablet is about 2%. In some embodiments, the weight percentage of the first polymer in the film-coated tablet is about 3%.

In some embodiments, the weight percentage of the second polymer in the film-coated tablet is about 0.1% to about 10% (e.g., about 0.1% to about 8%, about 0.1% to about 6%, about 0.1% to about 5%, about 0.1% to about 4%, about 0.1% to about 3%, about 0.1% to about 2%, about 0.1% to about 1%, about 1% to about 8%, about 1% to about 6%, about 1% to about 5%, about 1% to about 4%, about 1% to about 3%, about 1% to about 2%, about 2% to about 8%, about 2% to about 6%, about 2% to about 5%, about 2% to about 4%, about 2% to about 3%, about 0.1%, about 0.5%, about 1%, about 1.5%, about 2%, about 2.5%, about 3%, or about 4%). In some embodiments, the weight percentage of the second polymer in the film-coated tablet is about 2% to about 3%.

In some embodiments, the weight percentage of the first polymer in the tablet core is about 0.1% to about 10% (e.g., about 0.1% to about 8%, about 0.1% to about 6%, about 0.1% to about 5%, about 0.1% to about 4%, about 0.1% to about 3%, about 0.1% to about 2%, about 0.1% to about 1%, about 1% to about 8%, about 1% to about 6%, about 1% to about 5%, about 1% to about 4%, about 1% to about 3%, about 1% to about 2%, about 2% to about 8%, about 2% to about 6%, about 2% to about 5%, about 2% to about 4%, about 2% to about 3%, about 2.5% to about 3.5%, about 0.1%, about 0.5%, about 1%, about 1.5%, about 2%, about 2.5%, about 3%, or about 4%). In some embodiments, the weight percentage of the first polymer in the tablet core is about 2% to about 3%. In some embodiments, the weight percentage of the first polymer in the tablet core is about 2% to about 4%. In some embodiments, the weight percentage of the first polymer in the tablet core is about 2%. In some embodiments, the weight percentage of the first polymer in the tablet core is about 3%.

In some embodiments, the collective weight percentage of the first polymer and the coating in the tablet core is about 0.1% to about 10% (e.g., about 0.1% to about 8%, about 0.1% to about 6%, about 0.1% to about 5%, about 0.1% to about 4%, about 0.1% to about 3%, about 0.1% to about 2%, about 0.1% to about 1%, about 1% to about 8%, about 1% to about 6%, about 1% to about 5%, about 1% to about 4%, about 1% to about 3%, about 1% to about 2%, about 2% to about 8%, about 2% to about 6%, about 2% to about 5%, about 2% to about 4%, about 2% to about 3%, about 2.5% to about 3.5%, about 0.1%, about 0.5%, about 1%, about 1.5%, about 2%, about 2.5%, about 3%, or about 4%). In some embodiments, the collective weight percentage of the first polymer and the coating in the tablet core is about 2% to about 3%. In some embodiments, the collective weight percentage of the first polymer and the coating in the tablet core in the film-coated tablet is about 2% to about 4%. In some embodiments, the collective weight percentage of the first polymer and the coating in the tablet core in the film-coated tablet is about 2%. In some embodiments, the collective weight percentage of the first polymer and the coating in the tablet core in the tablet core is about 3%.

In some embodiments, the collective weight percentage of the first polymer and the second polymer in the film-coated tablet is about 0.1% to about 10% (e.g., about 0.1% to about 8%, about 0.1% to about 6%, about 0.1% to about 5%, about 0.1% to about 4%, about 0.1% to about 3%, about 0.1% to about 2%, about 0.1% to about 1%, about 1% to about 8%, about 1% to about 6%, about 1% to about 5%, about 1% to about 4%, about 1% to about 3%, about 1% to about 2%, about 2% to about 8%, about 2% to about 6%, about 2% to about 5%, about 2% to about 4%, about 2% to about 3%, about 2.5% to about 3.5%, about 0.1%, about 0.5%, about 1%, about 1.5%, about 2%, about 2.5%, about 3%, or about 4%). In some embodiments, the collective weight percentage of the first polymer and the second polymer in the film-coated tablet is about 2% to about 3%. In some embodiments, the collective weight percentage of the first polymer and the second polymer in the film-coated tablet is about 2% to about 4%. In some embodiments, the collective weight percentage of the first polymer and the second polymer in the film-coated tablet is about 2%. In some embodiments, the collective weight percentage of the first polymer and the second polymer in the film-coated tablet is about 3%.

In some embodiments, the collective weight percentage of the first polymer, the second polymer, and the coating in the film-coated tablet is about 0.1% to about 10% (e.g., about 0.1% to about 8%, about 0.1% to about 6%, about 0.1% to about 5%, about 0.1% to about 4%, about 0.1% to about 3%, about 0.1% to about 2%, about 0.1% to about 1%, about 1% to about 8%, about 1% to about 6%, about 1% to about 5%, about 1% to about 4%, about 1% to about 3%, about 1% to about 2%, about 2% to about 8%, about 2% to about 6%, about 2% to about 5%, about 2% to about 4%, about 2% to about 3%, about 2.5% to about 3.5%, about 0.1%, about 0.5%, about 1%, about 1.5%, about 2%, about 2.5%, about 3%, or about 4%). In some embodiments, the collective weight percentage of the first polymer, the second polymer, and the coating in the film-coated tablet is about 2% to about 3%. In some embodiments, the collective weight percentage of the first polymer, the second polymer, and the coating in the film-coated tablet is about 2% to about 4%. In some embodiments, the collective weight percentage of the first polymer, the second polymer, and the coating in the film-coated tablet is about 2%. In some embodiments, the collective weight percentage of the first polymer, the second polymer, and the coating in the film-coated tablet is about 3%.

In some embodiments, the thickness of the tablet layer is from about 0.01 mm to about 3 mm (e.g., about 0.01 mm to about 2.5 mm, about 0.01 mm to about 2 mm, about 0.01 mm to about 1.5 mm, about 0.01 mm to about 1 mm, about 0.01 mm to about 0.8 mm, about 0.01 mm to about 0.5 mm, about 0.01 mm to about 0.3 mm, about 0.1 mm to about 2.5 mm, about 0.1 mm to about 2 mm, about 0.1 mm to about 1.5 mm, about 0.1 mm to about 1 mm, about 0.1 mm to about 0.8 mm, about 0.1 mm to about 0.5 mm, about 0.1 mm to about 0.3 mm, about 0.3 mm to about 2.5 mm, about 0.3 mm to about 2 mm, about 0.3 mm to about 1.5 mm, about 0.3 mm to about 1 mm, about 0.3 mm to about 0.8 mm, about 0.3 mm to about 0.5 mm, about 0.3 mm to about 0.7 mm, about 0.2 mm to about 0.9 mm, about 0.4 mm to about 0.6 mm, about 0.5 mm to about 1 mm, about 0.5 mm, or about 0.1 mm). In some embodiments, the thickness of the tablet layer is from about 0.01 mm to about 0.5 mm. In some embodiments, the thickness of the tablet layer is about 0.1 mm.

In some embodiments (e.g., after preparation of the film-coated tablet), the concentration of the 1-methylcyclopropene in the film-coated tablet does not change substantially after at least 10 days (e.g., at least 20 days, at least 30 days, at least 40 days, at least 50 days, at least 55 days, about 30 days, about 40 days, about 50 days, about 55 days, about 56 days, or about 57 days) of exposure of the tablet to air. In some embodiments, the air has a humidity of 100%. In some embodiments, the air humidity is less than 100% (e.g., less than 90%, less than 80%, less than 70%, less than 60%, less than 50%, less than 40%, less than 30%, less than 20%, less than 10%, less than 5%, less than 2%, 10% to 90%, 30% to 60%, 10% to 50%, or 50% to 90%).

In some embodiments, the film-coated tablet is capable of releasing the 1-methylcyclopropene in the form of a gas when exposed to water, the tablet having a release profile characterized in that when exposed to water, the tablet releases substantially no 1-methylcyclopropene after a first time period of at least 20 seconds (e.g, at least 30 seconds, at least 40 seconds, at least 50 seconds, at least 1 minute, at least 1 minute and 10 seconds, at least 1 minute and 20 seconds, at least 1 minute and 30 seconds, at least 1 minute and 40 seconds, at least 1 minute and 50 seconds, at least 2 minutes, at least 2 minutes and 30 seconds, at least 3 minutes, at least 3 minutes and 30 seconds, at least 4 minutes, at least 5 minutes, at least 7 minutes, at least 10 minutes, at least 20 minutes, about 1 minute to about 3 minutes, about 1 minute and 30 seconds to about 2 minutes and 30 seconds, about 1 minute and 45 seconds to about 2 minutes and 15 seconds, about 1 minute, about 90 seconds, about 2 minutes, about 2 minutes and 30 seconds) after exposure to the water.

In some embodiments, the film-coated tablet is capable of releasing the 1-methylcyclopropene in the form of a gas when exposed to water, the tablet having a release profile characterized in that when exposed to water, the tablet releases substantially no 1-methylcyclopropene after a first time period of at least 1 minute after exposure to the water.

In some embodiments, the film-coated tablet is capable of releasing the 1-methylcyclopropene in the form of a gas when exposed to water, the tablet having a release profile characterized in that when exposed to water, the tablet releases substantially no 1-methylcyclopropene after a first time period of about 2 minutes after exposure to the water.

In some embodiments, the film-coated tablet releases 1-methylcyclopropene over a second time period that starts after the first time period, wherein the second time period is from about 5 minutes to about 10 hours (e.g, about 5 minutes to about 8 hours, about 5 minutes to about 6 hours, about 5 minutes to about 5 hours, about 5 minutes to about 4 hours, about 5 minutes to about 3 hours, about 5 minutes to about 2.5 hours, about 5 minutes to about 2 hours, about 5 minutes to about 1 hour, about 15 minutes to about 4 hours, about 15 minutes to about 4 hours, about 15 minutes to about 3 hours, about 30 minutes to about 3 hours, about 1 hour to about 3 hours, about 1.5 hours to about 2.5 hours, about 50 minutes to about 1 hour and 10 minutes, at least 15 minutes, at least 30 minutes, at least 45 minutes, at least 1 hour, at least 1 hour and 15 minutes, at least 1 hour and 30 minutes, at least 1 hour and 45 minutes, at least 2 hours, at least 2.5 hours, at least 3 hours, about 30 minutes, about 1 hour, about 1 hour and 30 minutes, or about 2 hours).

In some embodiments, the film-coated tablet releases 1-methylcyclopropene over a second time period that starts after the first time period, wherein the second time period is from about 5 minutes to about 3 hours.

In some embodiments, the film-coated tablet releases 1-methylcyclopropene over a second time period that starts after the first time period, wherein the second time period is about 120 minutes.

In some embodiments, the film-coated tablet is capable of releasing the 1-methylcyclopropene in the form of a gas when exposed to water, the tablet having a release profile characterized in that when exposed to water, the tablet releases substantially no 1-methylcyclopropene after a first time period of at least 1 minute after exposure to the water; and the film-coated tablet releases 1-methylcyclopropene over a second time period that starts after the first time period, wherein the second time period is from about 5 minutes to about 3 hours.

In some embodiments, the film-coated tablet is capable of releasing the 1-methylcyclopropene in the form of a gas when exposed to water, the tablet having a release profile characterized in that when exposed to water, the tablet releases substantially no 1-methylcyclopropene after a first time period of at least 1 minute after exposure to the water; and the film-coated tablet releases 1-methylcyclopropene over a second time period that starts after the first time period, wherein the second time period is about 120 minutes.

In some embodiments, the film-coated tablet is capable of releasing the 1-methylcyclopropene in the form of a gas when exposed to water, the tablet having a release profile characterized in that when exposed to water, the tablet releases substantially no 1-methylcyclopropene after a first time period of at least 2 minutes after exposure to the water; and the film-coated tablet releases 1-methylcyclopropene over a second time period that starts after the first time period, wherein the second time period is from about 5 minutes to about 3 hours.

In some embodiments, the film-coated tablet is capable of releasing the 1-methylcyclopropene in the form of a gas when exposed to water, the tablet having a release profile characterized in that when exposed to water, the tablet releases substantially no 1-methylcyclopropene after a first time period of at least 2 minutes after exposure to the water; and the film-coated tablet releases 1-methylcyclopropene over a second time period that starts after the first time period, wherein the second time period is about 120 minutes.

In some embodiments, the tablet can take multiple forms, including, but not limited to, pellets, briquettes, wafers, and rods.

In some embodiments, the microcapsule is a solid. In some embodiments, the film-coated tablet is a solid.

In some embodiments, the microcapsule, microcapsule, and/or film-coated tablets comprise substantially no water. In some of these embodiments, the microcapsules and/or film-coated tablets comprise less than 5% by weight of water. For example, the composition comprises less than 4%, less than 3%, less than 2%, less than 1%, less than 0.5%, or less than 0.1% by weight of water. In some embodiments, the microcapsules and/or film-coated tablets comprise no water.

In some embodiments, the film-coated tablet comprises a gloss layer disposed on the outer surface of the tablet layer. In some embodiments, the gloss layer comprises beeswax, carnauba wax, candelila wax, hard paraffin, sucrose, glucose, isomalt, sorbitol, erythritol, maltitol, mammitol, lactitol, xylitol, and hydroxypropyl methylcellulose.

In some embodiments, the film-coated tablet further comprises at least one component selected from the group consisting of: a third polymer, an adjuvant, a dye, a hygroscopic agent, or any combination thereof.

Third polymers include, but are not limited to, shellac, polyvinylpyrrolidone, polyvinylpolypyrrolidone, vinylpyrrolidone-vinyl acetate copolymers, vinyl acetate-crotonic acid, methyl vinyl - ethyl maleate copolymers, butyl maleate, tert-butylacrylamide-ethyl acrylate-acrylic acid copolymers, acrylate-acrylamide copolymers, vinylcaprolactam-vinylpyrrolidone-dimethylaminoethyl methacrylate copolymers, and any combination thereof.

Adjuvants include, but are not limited to oils (e.g., crop oil (e.g., paraffinic oil or petroleum oil) and vegetable oil), compatibility agents, buffering agents (e.g., monopotassium phosphate, monosodium phosphate, disodium phosphate, monopotassium phosphate, dipotassium phosphate, calcium carbonate), conditioning agents (e.g., polyquaterniums), defoaming agents (e.g., kerosene, fuel oil, vegetable oil, fatty alcohols, polydimethylsiloxane, hydrophobic silica, ethylene bis stearamide, paraffin waxes, ester waxes, polyethylene glycol-polypropylene glycol, alkyl polyacrylates, simethicone), antisettling agents (e.g., fumed silica), deposition agents, drift control agents (e.g., polyacrylamides), thickeners (e.g., alginic acid, agar, carrageenan, locust bean gum, pectin, gelatin, polyurethanes (e.g., acrylic polymers, latex, styrene, butadiene), polyvinyl alcohol, clays (e.g., attapulgite, bentonite, monmorillonite clays, cellulosics, sulfonates, guar gum, xanthan gum, cellulose, acacia gum, pullulan, konjac, casein, collagen, albumin, modified castor oil, and organosilicones (e.g., silicone resins, dimethicones, and modified silicones)), fertilizers (e.g., nitrogen-based fertilizers, phosphate fertilizers, and potassium fertilizers), foam markers, tank cleaners, colorants, suspension agents (e.g., alginates, methylcellulose, hydroxyethylcellulose, carboxymethylcellulose, sodium carboxymethylcellulose, microcrystalline cellulose, acacia, tragacanth, xanthan gum, bentonite, carbomer, carageenan, powdered cellulose, and gelatin), tackifiers (e.g., rosins, terpenes, modified terpenes, hydrogenated hydrocarbon resins, terpene-phenol resins, and novolacs), and any combination thereof.

Hygroscopic agents include, but are not limited to, glycerol, glucose, and combinations thereof.

Dyes include, but are not limited to, quinolone yellow, curcumin (alone or in combination with sodium hydrogen carbonate, tetrabutylammonium hydroxide (TBAOH), or patent blue), patent blue, hydrochromic ink, thymol blue (alone or in combination with TBAOH), bromothymol blue (alone or in combination with TBAOH or bromochlorophenol blue), indigo carmine (alone or in combination with TBAOH), bromochlorophenol blue (alone or in combination with TBAOH or acetic acid), and Reichardt's dye (alone or in combination with TBAOH).

### Methods of Use

Disclosed herein is a method of inhibiting an ethylene response in a plant, comprising:
contacting a microcapsule or film-coated tablet disclosed herein with water to release gaseous 1-methylcyclopropene; and
contacting the 1-methylcyclopropene with the plant.

Disclosed herein is a method of preserving the freshness of a plant, comprising:
contacting a microcapsule or film-coated tablet disclosed herein with water to release gaseous 1-methylcyclopropene; and
contacting the 1-methylcyclopropene with the plant.

Disclosed herein is a method of inhibiting an ethylene response in a plant, comprising:
placing the plant inside an enclosed space; and
contacting a microcapsule or film-coated tablet disclosed herein with water inside the enclosed space.

Disclosed herein is a method of preserving the freshness of a plant, comprising:
placing the plant inside an enclosed space; and
contacting a microcapsule or film-coated tablet disclosed herein with water inside the enclosed space.

Disclosed herein is a method of storing a plant, comprising:
placing the plant inside an enclosed space; and
contacting a microcapsule or film-coated tablet disclosed herein with water inside the enclosed space.

Disclosed herein is a method of packaging a plant, comprising:
placing the plant inside an enclosed space;
contacting a microcapsule or film-coated tablet disclosed herein with water inside the enclosed space; and
packaging the plant inside the enclosed space.

In the foregoing context, "enclosed space" refers to a space whose atmosphere is separated from the atmosphere outside of the enclosed space, such that exchange of the atmosphere between the enclosed space and the outside of the enclosed space is limited. In some embodiments, the enclosed space is inside of a container (e.g., a box, a bag, or a shipping container), a vehicle (e.g., the storage compartment of a truck), or a building (e.g., a shed, a warehouse, a greenhouse, a silo, a barn, or a room in a building).

In some embodiments, contacting the microcapsule or film-coated tablet with water comprises immersing the microcapsule or film-coated tablet in liquid water. In some embodiments, contacting the microcapsule or film-coated tablet with water comprises pouring water on the microcapsule or film-coated tablet. In some embodiments, contacting the microcapsule or film-coated tablet with water comprises spraying the microcapsule or film-coated tablet with water.

In some embodiments, the contacting occurs before harvest of the plant. For example, the contacting occurs with plants in a greenhouse. In some embodiments, the contacting occurs after harvest of the plant. For example, the composition is contacted with plants stored inside a container (e.g., a box, a bag, or a shipping container), a vehicle (e.g., the storage compartment of a truck), or a building (e.g., a shed, a warehouse, a greenhouse, a silo, a barn, or a room in a building).

In some embodiments, the water is liquid water. In some embodiments, the water has a temperature of about 1 °C to about 50 °C (e.g., about 1 °C to about 38 °C, about 5 °C to about 35 °C, about 8 °C to about 32 °C, about 10 °C to about 30 °C, about 10 °C to about 20 °C, about 20 °C to about 30 °C, about 20 °C to about 25 °C, about 25 °C to about 30 °C, about 20 °C, about 21 °C, about 22 °C, about 23 °C, about 24 °C, about 25 °C, about 26 °C, about 27 °C, or about 28 °C).

In some embodiments, the film-coated tablet is 0.1 mm in size to about 10 cm in size (e.g., about 0.1 mm to about 8 cm, about 1 mm to about 8 cm, about 2 mm to about 5 cm, about 3 mm to about 4 cm, about 5 mm to about 3 cm, about 7 mm to about 2.5 cm, about 1 cm to about 2.5 cm, about 5 mm to about 2.5 cm, about 5 mm to about 1.5 cm, about 1 cm to about 2 cm, about 1.5 cm to about 3 cm, about 8 mm to about 3 cm, about 1 mm to about 1 cm, about 1 cm to about 2 cm, about 2 cm to about 3 cm, about 4 cm to about 5 cm, about 5 cm to about 6 cm, about 6 cm to about 7 cm, about 7 cm to about 8 cm). In some embodiments, the size of the tablet is the diameter of the tablet.

In some embodiments, the plants are packaged inside, e.g., boxes, baskets, hampers, palletized containers, cartons, lugs, flats, crates, bags, sacks, clamp shell containers, and/or bulk bins. In some embodiments, the packaging is vented. In some embodiments, the packaging is airtight.

In some embodiments, the plant is a fruit or vegetable. For example, the plant is a fruit. For example, the fruit is a banana, an apple, a pear, a peach, a plum, a melon (e.g., cantaloupe, honeydew, or watermelon), an orange, a grape, a strawberry, a blueberry, a kiwifruit, an apricot, a mango, a nectarine, a papaya, a plum, a persimmon, a lime, or a pineapple. For example, the fruit is a banana, a peach, a grape, a strawberry, or a blueberry. For example, the plant is a vegetable. For example, the vegetable is a tomato, an onion, a cucumber, an avocado, a broccoli, a carrot, a gherkin, a cabbage, a turnip, an eggplant, an aubergine, a chili, a pepper, lettuce, chicory, spinach, or garlic. For example, the vegetable is a tomato.

In some embodiments, the plant is a flower. For example, the flower is a rose, carnation, tulip, daisy, sunflower, daffodil, orchid, iris, lilac, gardenia, jasmine, magnolia, hyacinth, or lily of the valley. In some embodiments, the plant is a flower cut at the stem. In some embodiments, the plant is planted in a pot.

### Methods of Preparation

Some embodiments provide a method of preparing a film-coated tablet comprising:
combining a complex of 1-methylcyclopropene and α-cyclodextrin, an acid, a base, and an excipient to form a mixture;
micronizing the mixture to form particles;
applying a solution of a first polymer in a first solvent to the particles; drying the first solvent to form microcapsules;
aggregating a plurality of the microcapsules together to form a tablet core;
applying a solution of a second polymer in a second solvent to the tablet core; and
drying the second solvent to form a tablet layer surrounding the tablet core, wherein the tablet layer comprises the second polymer, to form the film-coated tablet.

Some embodiments provide a method of preparing a film-coated tablet comprising:
combining a complex of 1-methylcyclopropene and α-cyclodextrin, an acid, and an excipient to form a mixture;
micronizing the mixture to form particles;
applying a solution of a first polymer in a first solvent to the particles;
drying the first solvent to form microcapsules;
aggregating a plurality of the microcapsules and a plurality of particles of base surrounded by a coating together to form a tablet core;
applying a solution of a second polymer in a second solvent to the tablet core; and
drying the second solvent to form a tablet layer surrounding the tablet core, wherein the tablet layer comprises the second polymer, to form the film-coated tablet.

Some embodiments provide a film-coated tablet, prepared by a method comprising:
combining a complex of 1-methylcyclopropene and α-cyclodextrin, an acid, a base, and an excipient to form a mixture;
micronizing the mixture to form particles;
applying a solution of a first polymer in a first solvent to the particles;
drying the first solvent to form microcapsules;
aggregating a plurality of the microcapsules together to form a tablet core;
applying a solution of a second polymer in a second solvent to the tablet core; and
drying the second solvent to form a tablet layer surrounding the tablet core, wherein the tablet layer comprises the second polymer.

Some embodiments provide a film-coated tablet, prepared by a method comprising:
combining a complex of 1-methylcyclopropene and α-cyclodextrin, an acid, and an excipient to form a mixture;
micronizing the mixture to form particles;
applying a solution of a first polymer in a first solvent to the particles;
drying the first solvent to form microcapsules;
aggregating a plurality of the microcapsules and a plurality of particles of base surrounded by a coating together to form a tablet core;
applying a solution of a second polymer in a second solvent to the tablet core; and
drying the second solvent to form a tablet layer surrounding the tablet core, wherein the tablet layer comprises the second polymer.

In some embodiments, the concentration of 1-methylcyclopropene in the complex of 1-methylcyclopropene and α-cyclodextrin is about 1% to about 5%, for example, about 1% to about 3%, about 3% to about 5%, about 2% to about 4%, about 3% to about 4%, about 3%, about 3.1%, about 3.2%, about 3.3%, about 3.4%, about 3.5%, about 3.6%, about 3.7%, about 3.8%, about 3.9%, or about 4%.

In some embodiments, the weight percentage of 1-methylcyclopropene in the mixture is from about 0.1% to about 10% (e.g., about 0.1% to about 7%, about 0.1% to about 5%, about 0.1% to about 4%, about 0.1% to about 3%, about 0.1% to about 2%, about 0.1% to about 1.5%, about 0.1% to about 1%, about 0.5% to about 4%, about 0.7% to about 3%, about 0.7% to about 2%, about 1% to about 2%, about 0.1% to about 1.5%, about 0.4% to about 1.4%, about 0.5% to about 1.1%, about 0.5%, about 0.6%, about 0.7%, about 0.8%, about 0.9%, about 1%, about 1.1%, about 1.2%, about 1.3%, about 1.4%, about 0.82%). In some embodiments, the weight percentage of 1-methylcyclopropene in the mixture is from about 0.5% to about 1.1%. In some embodiments, the weight percentage of 1-methylcyclopropene in the mixture is from about 0.1% to about 4%. In some embodiments, the weight percentage of 1-methylcyclopropene in the mixture is about 0.7% to about 2%, In some embodiments, the weight percentage of 1-methylcyclopropene in the mixture is about 0.82%. In some embodiments, the weight percentage of 1-methylcyclopropene in the mixture is about 1.3%.

In some embodiments, the acid is selected from the group consisting of: citric acid, tartaric acid, fumaric acid, salicylic acid, oxalic acid, succinic acid, maleic acid, malic acid, glycolic acid, glutaric acid, gluconic acid, and combinations thereof. In some embodiments, the acid is citric acid. In some embodiments, the citric acid is anhydrous citric acid.

In some embodiments, the weight percentage of the acid in the mixture is from about 1% to about 70% (e.g., about 1% to about 60%, about 1% to about 50%, about 1% to about 40%, about 1% to about 30%, about 1% to about 20%, about 10% to about 60%, about 10% to about 50%, about 10% to about 40%, about 10% to about 30%, about 20% to about 60%, about 20% to about 50%, about 20% to about 40%, about 30% to about 70%, about 25% to about 40%, about 25% to about 60%, about 50% to about 65%, about 50% to about 60%, about 50% to about 56%, about 48% to about 58%, about 27% to about 40%, about 29% to about 38%, about 30%, about 31%, about 32%, about 33%, about 34%, about 35%, about 36%, or about 33.6%). In some embodiments, the weight percentage of the acid in the mixture is from about 27% to about 40%. In some embodiments, the weight percentage of the acid in the mixture is from about 30% to about 70%. In some embodiments, the weight percentage of the acid in the mixture is from about 48% to about 58%. In some embodiments, the weight percentage of the acid in the mixture is about 31.65%. In some embodiments, the weight percentage of the acid in the mixture is about 53%.

In some embodiments, the molar ratio of the 1-methylcyclopropene to the acid is about 1:1 to about 1:100 (e.g., about 1:1 to about 1:100, about 1:1 to about 1:80, about 1:1 to about 1:60, about 1:1 to about 1:40, about 1:1 to about 1:30, about 1:1 to about 1:25, about 1:1 to about 1:20, about 1:1 to about 1:15, about 1:1 to about 1:10, about 1:1 to about 1:5, about 1:1 to about 1:4, about 1:1 to about 1:3, about 1:1 to about 1:2, about 1:2 to about 1:100, about 1:2 to about 1:80, about 1:2 to about 1:60, about 1:2 to about 1:40, about 1:2 to about 1:30, about 1:2 to about 1:25, about 1:2 to about 1:20, about 1:2 to about 1:25, about 1:2 to about 1:20, about 1:2 to about 1:5, about 1:2 to about 1:4, about 1:2 to about 1:3, about 1:3 to about 1:100, about 1:3 to about 1:80, about 1:3 to about 1:60, about 1:3 to about 1:40, about 1:3 to about 1:30, about 1:3 to about 1:25, about 1:3 to about 1:20, about 1:3 to about 1:35, about 1:3 to about 1:30, about 1:3 to about 1:5, about 1:3 to about 1:4, about 1:4 to about 1:100, about 1:4 to about 1:80, about 1:4 to about 1:60, about 1:4 to about 1:40, about 1:4 to about 1:30, about 1:4 to about 1:25, about 1:4 to about 1:20, about 1:4 to about 1:45, about 1:4 to about 1:40, about 1:4 to about 1:5, about 1:6 to about 1:15, about 1:8 to about 1:20, about 1:9 to about 1:14, about 1:10 to about 1:12, about 1:4 to about 1:25, about 1:4, about 1:5, about 1:6, about 1:7, about 1:8, about 1:9, about 1:10, about 1:11, about 1:12, about 1:13, about 1:14, about 1:15, or about 1:11.5). In some embodiments, the molar ratio of the 1-methylcyclopropene to the acid is about 1:4 to about 1:25. In some embodiments, the molar ratio of the 1-methylcyclopropene to the acid is about 1:11.

In some embodiments, the base is selected from the group consisting of: sodium bicarbonate, potassium bicarbonate, calcium carbonate, sodium carbonate, potassium carbonate, sodium glycine carbonate, sodium potassium carbonate, and combinations thereof. In some embodiments, the base is sodium bicarbonate.

In some embodiments, the weight percentage of the base in the mixture is from about 1% to about 70% (e.g., about 1% to about 60%, about 1% to about 50%, about 1% to about 40%, about 1% to about 30%, about 1% to about 20%, about 10% to about 60%, about 10% to about 50%, about 10% to about 40%, about 10% to about 30%, about 20% to about 60%, about 20% to about 50%, about 20% to about 40%, about 25% to about 40%, about 28% to about 47%, about 27% to about 40%, about 29% to about 38%, about 30%, about 31%, about 32%, about 33%, about 34%, about 35%, about 36%, about 36.6%, about 37%, about 38%, about 39%, or about 40%). In some embodiments, the weight percentage of the base in the mixture is from about 28% to about 47%. In some embodiments, the weight percentage of the base in the mixture is about 37%.

In some embodiments, the molar ratio of the acid to the base is about 10:1 to about 1:10 (e.g., about 10:1 to about 5:1, about 5:1 to about 3:1, about 3:1 to about 1:1, about 1:1 to about 3:1, about 3:1 to about 5:1, about 5:1 to about 10:1, about 5:1 to about 1:5, about 4: 1 to about 1:4, about 2:1 to about 1:4, about 1:1 to about 1:4, about 1:1 to about 1:4, about 1:2 to about 1:4, about 1:2 to about 1:3, about 3:1 to about 1:4, about 1:1, about 1:1.5, about 1:2, about 1:2.5, about 1:3, or about 1:4). In some embodiments, the molar ratio of the acid to the base is about 3:1 to about 1:4. In some embodiments, the molar ratio of the acid to the base is about 1:2.5.

In some embodiments, the excipient is selected from a hydroxyalkylcellulose (e.g., hydroxyethylcellulose), magnesium stearate, sodium citrate, dicalcium phosphate, a starch, lactose, sucrose, glucose, mannitol, silicic acid, carboxymethylcellulose, an alginate, gelatin, polyvinylpyrrolidone, polyvinylpolypyrrolidone, acacia, calcium carbonate, alginic acid, silicate, sodium carbonate, sodium croscarmellose, kaolin, bentonite clay, talc, calcium stearate, a polyethylene glycol, or any combination thereof. In some embodiments, the excipient comprises hydroxyethylcellulose and magnesium stearate. In some embodiments, the excipient is selected from the group consisting of: hydroxyethylcellulose, magnesium stearate, sodium citrate, dicalcium phosphate, a starch, lactose, sucrose, glucose, mannitol, silicic acid, carboxymethylcellulose, an alginate, gelatin, polyvinylpyrrolidone, polyvinylpolyvinylpyrrolidone, acacia, calcium carbonate, alginic acid, silicate, sodium carbonate, kaolin, bentonite clay, talc, calcium stearate, a polyethylene glycol, and combinations thereof. In some embodiments, the hydroxyalkylcellulose is hydroxyethylcellulose. In some embodiments, the excipient is hydroxyethylcellulose and magnesium stearate. In some embodiments, the excipient is a combination of hydroxyethylcellulose and magnesium stearate. In some embodiments, the excipient is a combination of hydroxyethylcellulose and magnesium stearate in an about 1:3 to about 2:1 ratio by weight (e.g., a 2:3 ratio by weight).

In some embodiments, the weight percentage of the excipient in the mixture is from about 0.5 % to about 95% (e.g., about 1% to about 95%, about 1% to about 90%, about 5% to about 90%, about 1% to about 80%, about 1% to about 70%, about 1% to about 60%, about 1% to about 50%, about 1% to about 40%, about 1% to about 30%, about 1% to about 25%, about 1% to about 20%, about 1% to about 15%, about 1% to about 10%, about 2% to about 10%, about 2% to about 13%, about 2% to about 8%, about 2% to about 7%, about 3% to about 7%, about 4% to about 6%, about 2% to about 15%, about 1%, about 2%, about 3%, about 4%, about 5%, about 6%, about 7%, about 8%, about 9%, or about 10%). In some embodiments, the weight percentage of the excipient in the mixture is from about 2% to about 15%. In some embodiments, the weight percentage of the excipient in the mixture is about 5%. In some embodiments, the weight percentage of the excipient in the mixture is about 8%.

In some embodiments, micronizing the mixture comprises grinding the mixture, milling the mixture, bashing the mixture, crushing the mixture, cutting the mixture, subjecting the mixture to the Rapid Expansion of Supercritical Solutions (RESS) method, subjecting the mixture to the Supercritical Anti-Solvent (SAS) method, subjecting the mixture to the Particles from Gas Saturated Solutions (PGSS) method or any combination thereof.

In some embodiments, the particles have a size of about 1 to about 250 microns (e.g., about 1 to about 200 microns, about 1 to about 150 microns, about 1 to about 100 microns, about 1 to about 50 microns, about 1 to about 25 microns, about 5 to about 150 microns, about 5 to about 100 microns, about 5 to about 80 microns, about 5 to about 70 microns, about 5 to about 60 microns, about 5 to about 55 microns, about 10 to about 50 microns, about 10 to about 20 microns, about 10 to about 30 microns, about 20 to about 30 microns, about 30 to about 40 microns, or about 40 to about 50 microns). In some embodiments, the particles have a size of about 10 to about 50 microns.

In some embodiments, the microcapsules have a size of about 1 to about 250 microns (e.g., about 1 to about 1000 microns, about 1 to about 750 microns, about 1 to about 500 microns, about 1 to about 350 microns, about 1 to about 300 microns, about 40 to about 300 microns, about 40 to about 100 microns, about 100 to about 200 microns, about 200 to about 300 microns, about 300 to about 400 microns, about 50 to about 150 microns, about 150 to about 250 microns, about 10 to about 50 microns, or about 50 to about 250 microns). In some embodiments, the microcapsules have a size of about 50 to about 250 microns.

In some embodiments, applying the solution of the first polymer in the first solvent to the particles comprises spraying the solution.

In some embodiments, the concentration of the solution of the first polymer in the first solvent is about 0.1% to about 20% (e.g., about 0.1% to about 20%, about 0.1% to about 18%, about 0.1% to about 15%, about 0.1% to about 13%, about 0.1% to about 10%, about 0.1% to about 8%, about 0.1% to about 7%, about 0.1% to about 5%, about 0.1% to about 3%, about 0.5% to about 2%, about 0.5% to about 1.5%, about 1% to about 15%, about 5% to about 15%, about 0.1% to about 1.5%, about 0.1% to about 1%, about 0.1% to about 0.8%, about 0.1% to about 0.5%, about 0.5% to about 1%, about 1% to about 1.5%, about 0.1%, about 0.2%, about 0.5%, about 0.7%, about 0.9%, about 1%, about 1.2%, about 1.5%, about 1.7%, about 2%, about 3%, about 4%, or about 5%) by weight. In some embodiments, the concentration of the solution of the first polymer in the first solvent is about 0.5% to about 5% by weight. In some embodiments, the concentration of the solution of the first polymer in the first solvent is about 1% by weight.

In some embodiments, the first solvent comprises ethanol, methanol, acetone, chloroform, dichloromethane, ethyl acetate, diethyl ether, diisopropyl ether, 1,4-dioxane, tetrahydrofuran, water, benzene, isopropyl alcohol, methyl tert-butyl ether or any combination thereof. In some embodiments, the first solvent is selected from the group consisting of: ethanol, methanol, acetone, chloroform, dichloromethane, ethyl acetate, diethyl ether, diisopropyl ether, 1,4-dioxane, tetrahydrofuran, water, benzene, isopropyl alcohol, methyl tert-butyl ether, and combinations thereof. In some embodiments, the first solvent comprises an alcohol. In some embodiments, the first solvent comprises ethanol. In some embodiments, the first solvent is ethanol.

In some embodiments, the first polymer is water soluble. In some embodiments, the first polymer is selected from the group consisting of: a hydroxyalkyl cellulose (e.g., hydroxyethylcellulose, hydroxypropyl cellulose), poly(ethylene glycol), polyvinylpyrrolidone, polyvinylpolypyrrolidone, polyvinyl alcohol, polyacrylic acid, a polyacrylamide, N-(2-hydroxypropyl)methacrylamide, divinyl ether-maleic anhydride, polyoxazoline, a polyphosphate, a polyphosphazene, xanthan gum, a pectin, a dextran, carrageenan, sodium carboxymethylcellulose, sodium croscarmellose, hyaluronic acid, albumin, and combinations thereof. In some embodiments, the hydroxyalkyl cellulose is hydroxyethyl cellulose. In some embodiments, the hydroxyalkyl cellulose is hydroxypropyl cellulose. In some embodiments, the first polymer comprises hydroxypropyl cellulose, poly(ethylene glycol), polyvinylpyrrolidone, polyvinylpolypyrrolidone, polyvinyl alcohol, polyacrylic acid, a polyacrylamide, N-(2-hydroxypropyl)methacrylamide, divinyl ether-maleic anhydride, polyoxazoline, a polyphosphate, a polyphosphazene, xanthan gum, a pectin, a dextran, carrageenan, sodium carboxymethylcellulose, sodium croscarmellose, hyaluronic acid, albumin or any combination thereof. In some embodiments, the first polymer comprises hydroxpropyl cellulose. In some embodiments, the first polymer is a hydroxyalkyl cellulose. In some embodiments, the first polymer is hydroxypropyl cellulose.

In some embodiments, the particles of base surrounded by a coating are prepared by applying a solution of a coating material in a third solvent to the particles of base; and drying the third solvent to form particles of base surrounded by a coating.

In some embodiments, the coating material is selected from the group consisting of: a hydroxyalkyl cellulose (e.g., hydroxyethylcellulose, hydroxypropyl cellulose), poly(ethylene glycol), polyvinylpyrrolidone, polyvinylpolypyrrolidone, polyvinyl alcohol, polyacrylic acid, a polyacrylamide, N-(2-hydroxypropyl)methacrylamide, divinyl ether-maleic anhydride, polyoxazoline, a polyphosphate, a polyphosphazene, xanthan gum, a pectin, a dextran, carrageenan, sodium carboxymethylcellulose, sodium croscarmellose, hyaluronic acid, albumin, and combinations thereof. In some embodiments, the hydroxyalkyl cellulose is hydroxyethyl cellulose. In some embodiments, the hydroxyalkyl cellulose is hydroxypropyl cellulose. In some embodiments, the coating material comprises hydroxypropyl cellulose, poly(ethylene glycol), polyvinylpyrrolidone, polyvinylpolypyrrolidone, polyvinyl alcohol, polyacrylic acid, a polyacrylamide, N-(2-hydroxypropyl)methacrylamide, divinyl ether-maleic anhydride, polyoxazoline, a polyphosphate, a polyphosphazene, xanthan gum, a pectin, a dextran, carrageenan, sodium carboxymethylcellulose, sodium croscarmellose, hyaluronic acid, albumin or any combination thereof. In some embodiments, the coating material comprises hydroxpropyl cellulose. In some embodiments, the coating material is a hydroxyalkyl cellulose. In some embodiments, the coating material is hydroxypropyl cellulose.

In some embodiments, applying the solution of the coating material in the third solvent to the particles comprises spraying the solution.

In some embodiments, the concentration of the solution of the coating material in the third solvent is about 0.1% to about 20% (e.g., about 0.1% to about 20%, about 0.1% to about 18%, about 0.1% to about 15%, about 0.1% to about 13%, about 0.1% to about 10%, about 0.1% to about 8%, about 0.1% to about 7%, about 0.1% to about 5%, about 0.1% to about 3%, about 0.5% to about 2%, about 0.5% to about 1.5%, about 1% to about 15%, about 5% to about 15%, about 0.1% to about 1.5%, about 0.1% to about 1%, about 0.1% to about 0.8%, about 0.1% to about 0.5%, about 0.5% to about 1%, about 1% to about 1.5%, about 0.1%, about 0.2%, about 0.5%, about 0.7%, about 0.9%, about 1%, about 1.2%, about 1.5%, about 1.7%, about 2%, about 3%, about 4%, or about 5%) by weight. In some embodiments, the concentration of the solution of the coating material in the third solvent is about 0.5% to about 5% by weight. In some embodiments, the concentration of the solution of the coating material in the third solvent is about 1% by weight.

In some embodiments, the third solvent comprises ethanol, methanol, acetone, chloroform, dichloromethane, ethyl acetate, diethyl ether, diisopropyl ether, 1,4-dioxane, tetrahydrofuran, water, benzene, isopropyl alcohol, methyl tert-butyl ether or any combination thereof. In some embodiments, the third solvent is selected from the group consisting of: ethanol, methanol, acetone, chloroform, dichloromethane, ethyl acetate, diethyl ether, diisopropyl ether, 1,4-dioxane, tetrahydrofuran, water, benzene, isopropyl alcohol, methyl tert-butyl ether, and combinations thereof. In some embodiments, the third solvent comprises an alcohol. In some embodiments, the third solvent comprises ethanol. In some embodiments, the third solvent is ethanol.

In some embodiments, aggregating the plurality of the microcapsules together comprises compressing the plurality of the microcapsules together. The aggregating (e.g., compressing) can be performed, e.g., with a press (e.g., a pellet press, tablet press, or roller press), a granulator (e.g., a pan granulator), or an extruder. In some embodiments, compressing the plurality of the microcapsules together comprises compressing the microcapsules in a tablet press. In some embodiments, compressing the plurality of the microcapsules together comprises compressing the microcapsules in a tablet press under a force of about 2 kN to about 500 kN (e.g., about 2 kN to about 400 kN, about 2 kN to about 300 kN, about 2 kN to about 250 kN, about 2 kN to about 200 kN, about 2 kN to about 150 kN, about 20 kN to about 120 kN, about 30 kN to about 70 kN, about 40 kN to about 60 kN, or about 50 kN). In some embodiments, compressing the plurality of the microcapsules together comprises compressing the microcapsules in a tablet press under a force of about 50 kN.

In some embodiments, aggregating the plurality of the microcapsules and the plurality of particles of base surrounded by a coating together comprises compressing the plurality of the microcapsules and the plurality of particles of base surrounded by a coating together. The aggregating (e.g., compressing) can be performed, e.g., with a press (e.g., a pellet press, tablet press, or roller press), a granulator (e.g., a pan granulator), or an extruder. In some embodiments, compressing the plurality of the microcapsules and the plurality of particles of base surrounded by a coating together comprises compressing the microcapsules in a tablet press. In some embodiments, compressing the plurality of the microcapsules and the plurality of particles of base surrounded by a coating together comprises compressing the microcapsules in a tablet press under a force of about 2 kN to about 500 kN (e.g., about 2 kN to about 400 kN, about 2 kN to about 300 kN, about 2 kN to about 250 kN, about 2 kN to about 200 kN, about 2 kN to about 150 kN, about 20 kN to about 120 kN, about 30 kN to about 70 kN, about 40 kN to about 60 kN, or about 50 kN). In some embodiments, compressing the plurality of the microcapsules and the plurality of particles of base surrounded by a coating together comprises compressing the microcapsules and particles of base surrounded by a coating in a tablet press under a force of about 50 kN.

In some embodiments, applying the solution of the second polymer in the second solvent to the particles comprises spraying the solution.

In some embodiments, the concentration of the solution of the second polymer in the second solvent is about 0.1% to about 20% (e.g., about 0.1% to about 20%, about 0.1% to about 18%, about 0.1% to about 15%, about 0.1% to about 13%, about 0.1% to about 10%, about 0.1% to about 8%, about 0.1% to about 7%, about 0.1% to about 5%, about 0.1% to about 3%, about 0.5% to about 2%, about 0.5% to about 1.5%, about 1% to about 15%, about 5% to about 15%, about 0.1% to about 1.5%, about 0.1% to about 1%, about 0.1% to about 0.8%, about 0.1% to about 0.5%, about 0.5% to about 1%, about 1% to about 1.5%, about 0.1%, about 0.2%, about 0.5%, about 0.7%, about 0.9%, about 1%, about 1.2%, about 1.5%, about 1.7%, about 2%, about 3%, about 4%, or about 5%) by weight. In some embodiments, the concentration of the solution of the second polymer in the second solvent is about 0.5% to about 5% by weight. In some embodiments, the concentration of the solution of the second polymer in the second solvent is about 1% by weight.

In some embodiments, the second solvent comprises ethanol, methanol, acetone, chloroform, dichloromethane, ethyl acetate, diethyl ether, diisopropyl ether, 1,4-dioxane, tetrahydrofuran, water, benzene, isopropyl alcohol, methyl tert-butyl ether or any combination thereof. In some embodiments, the second solvent is selected from the group consisting of: ethanol, methanol, acetone, chloroform, dichloromethane, ethyl acetate, diethyl ether, diisopropyl ether, 1,4-dioxane, tetrahydrofuran, water, benzene, isopropyl alcohol, methyl tert-butyl ether, and combinations thereof. In some embodiments, the second solvent comprises an alcohol. In some embodiments, the second solvent comprises ethanol. In some embodiments, the second solvent is ethanol.

In some embodiments, the second polymer is water soluble. In some embodiments, the second polymer is selected from the group consisting of: a hydroxyalkyl cellulose (e.g., hydroxyethylcellulose, hydroxypropyl cellulose), poly(ethylene glycol), polyvinylpyrrolidone, polyvinylpolypyrrolidone, polyvinyl alcohol, polyacrylic acid, a polyacrylamide, N-(2-hydroxypropyl)methacrylamide, divinyl ether-maleic anhydride, polyoxazoline, a polyphosphate, a polyphosphazene, xanthan gum, a pectin, a dextran, carrageenan, sodium carboxymethylcellulose, sodium croscarmellose, hyaluronic acid, albumin, and combinations thereof. In some embodiments, the hydroxyalkyl cellulose is hydroxyethyl cellulose. In some embodiments, the hydroxyalkyl cellulose is hydroxypropyl cellulose. In some embodiments, the second polymer comprises hydroxypropyl cellulose, poly(ethylene glycol), polyvinylpyrrolidone, polyvinylpolypyrrolidone, polyvinyl alcohol, polyacrylic acid, a polyacrylamide, N-(2-hydroxypropyl)methacrylamide, divinyl ether-maleic anhydride, polyoxazoline, a polyphosphate, a polyphosphazene, xanthan gum, a pectin, a dextran, carrageenan, sodium carboxymethylcellulose, sodium croscarmellose, hyaluronic acid, albumin or any combination thereof. In some embodiments, the second polymer comprises hydroxpropyl cellulose. In some embodiments, the second polymer is a hydroxyalkyl cellulose. In some embodiments, the second polymer is hydroxypropyl cellulose.

In some embodiments, drying the first solvent comprises drying the solvent under vacuum (e.g., in a microwave vacuum), in a spray dryer, or in a fluid-bed dryer. In some embodiments, drying the first solvent comprises drying the solvent in a spray dryer. In some embodiments, drying the first solvent comprises drying the solvent in a spray dryer at about 30 °C to about 90 °C (e.g., 30 °C to about 80 °C, 30 °C to about 70 °C, 30 °C to about 60 °C, 30 °C to about 50 °C, 35 °C to about 40 °C, or about 40 °C) under an inert gas (e.g., nitrogen or argon). In some embodiments, drying the first solvent comprises drying in a spray dryer at about 30 °C to about 90 °C (e.g., 30 °C to about 80 °C, 30 °C to about 70 °C, 30 °C to about 60 °C, 30 °C to about 50 °C, 35 °C to about 40 °C, or about 40 °C) under nitrogen. In some embodiments, drying the first solvent comprises drying in a spray dryer at about 40 °C under nitrogen.

In some embodiments, drying the second solvent comprises drying the solvent under vacuum (e.g., in a microwave vacuum), in a spray dryer, or in a fluid-bed dryer. In some embodiments, drying the second solvent comprises drying the solvent in a spray dryer. In some embodiments, drying the second solvent comprises drying the solvent in a spray dryer at about 30 °C to about 90 °C (e.g., 30 °C to about 80 °C, 30 °C to about 70 °C, 30 °C to about 60 °C, 30 °C to about 50 °C, 35 °C to about 40 °C, or about 40 °C) under an inert gas (e.g., nitrogen or argon). In some embodiments, drying the second solvent comprises drying in a spray dryer at about 30 °C to about 90 °C (e.g., 30 °C to about 80 °C, 30 °C to about 70 °C, 30 °C to about 60 °C, 30 °C to about 50 °C, 35 °C to about 40 °C, or about 40 °C) under nitrogen. In some embodiments, drying the second solvent comprises drying in a spray dryer at about 40 °C under nitrogen.

In some embodiments, drying the third solvent comprises drying the solvent under vacuum (e.g., in a microwave vacuum), in a spray dryer, or in a fluid-bed dryer. In some embodiments, drying the third solvent comprises drying the solvent in a spray dryer. In some embodiments, drying the third solvent comprises drying the solvent in a spray dryer at about 30 °C to about 90 °C (e.g., 30 °C to about 80 °C, 30 °C to about 70 °C, 30 °C to about 60 °C, 30 °C to about 50 °C, 35 °C to about 40 °C, or about 40 °C) under an inert gas (e.g., nitrogen or argon). In some embodiments, drying the third solvent comprises drying in a spray dryer at about 30 °C to about 90 °C (e.g., 30 °C to about 80 °C, 30 °C to about 70 °C, 30 °C to about 60 °C, 30 °C to about 50 °C, 35 °C to about 40 °C, or about 40 °C) under nitrogen. In some embodiments, drying the third solvent comprises drying in a spray dryer at about 40 °C under nitrogen.

In some embodiments, the thickness of the tablet layer is from about 0.01 mm to about 3 mm (e.g., about 0.01 mm to about 2.5 mm, about 0.01 mm to about 2 mm, about 0.01 mm to about 1.5 mm, about 0.01 mm to about 1 mm, about 0.01 mm to about 0.8 mm, about 0.01 mm to about 0.5 mm, about 0.01 mm to about 0.3 mm, about 0.1 mm to about 2.5 mm, about 0.1 mm to about 2 mm, about 0.1 mm to about 1.5 mm, about 0.1 mm to about 1 mm, about 0.1 mm to about 0.8 mm, about 0.1 mm to about 0.5 mm, about 0.1 mm to about 0.3 mm, about 0.3 mm to about 2.5 mm, about 0.3 mm to about 2 mm, about 0.3 mm to about 1.5 mm, about 0.3 mm to about 1 mm, about 0.3 mm to about 0.8 mm, about 0.3 mm to about 0.5 mm, about 0.3 mm to about 0.7 mm, about 0.2 mm to about 0.9 mm, about 0.4 mm to about 0.6 mm, about 0.5 mm to about 1 mm, about 0.5 mm, or about 0.1 mm). In some embodiments, the thickness of the tablet layer is from about 0.01 mm to about 0.5 mm. In some embodiments, the thickness of the tablet layer is about 0.1 mm.

In some embodiments, the equipment used to prepare the tablets (such as, for example, a tablet press) is substantially free of salts and complexes that contain transition metals. In some embodiments, the equipment used to prepare the tablets is substantially free of chromium, manganese, copper, iron, cobalt, zinc, silver, and/or mercury. For example, the equipment used to prepare the tablets is substantially free of chromium. For example, the equipment used to prepare the tablets is substantially free of manganese. For example, the equipment used to prepare the tablets is substantially free of copper. For example, the equipment used to prepare the tablets is substantially free of iron. For example, the equipment used to prepare the tablets is substantially free of cobalt. For example, the equipment used to prepare the tablets is substantially free of zinc. For example, the equipment used to prepare the tablets is substantially free of silver. For example, the equipment used to prepare the tablets is substantially free of mercury.

Some embodiments provide a method of preparing a film-coated tablet comprising:
applying a solution of a second polymer in a second solvent to a tablet core, wherein the tablet core comprises a complex of 1-methylcyclopropene and α-cyclodextrin; and
drying the second solvent to form a tablet layer surrounding the tablet core, wherein the tablet layer comprises the second polymer, to form the film-coated tablet.

Some embodiments provide a film-coated tablet, prepared by a method comprising:
applying a solution of a second polymer in a second solvent to a tablet core, wherein the tablet core comprises a complex of 1-methylcyclopropene and α-cyclodextrin; and
drying the second solvent to form a tablet layer surrounding the tablet core, wherein the tablet layer comprises the second polymer, to form the film-coated tablet.

In some embodiments, the tablet core comprises a plurality of microcapsules. In some embodiments, the microcapsules comprise a complex of 1-methylcyclopropene and α-cyclodextrin. In some embodiments, the microcapsules comprise an acid. In some embodiments, the microcapsules comprise a base. In some embodiments, the microcapsules comprise an excipient. In some embodiments, the microcapsules comprise a complex of 1-methylcyclopropene and α-cyclodextrin, an acid, a base, and an excipient.

In some embodiments, the tablet core comprises an acid. In some embodiments, the tablet core comprises a base. In some embodiments, the base is surrounded by a coating. In some embodiments, the tablet core comprises an excipient. In some embodiments, the tablet core comprises a complex of 1-methylcyclopropene and α-cyclodextrin, an acid, a base, and an excipient.

In some embodiments, forming the tablet core comprises aggregating a plurality of microcapsules together to form the tablet core.

In some embodiments, forming the tablet core comprises aggregating a plurality of microcapsules and a plurality of particles of base surrounded by a coating together to form the tablet core.

In some embodiments, forming the microcapsules comprises applying a solution of a first polymer in a first solvent to particles; and drying the first solvent to form the microcapsules.

In some embodiments, forming the particles comprises:
combining a complex of 1-methylcyclopropene and α-cyclodextrin, an acid, a base, and an excipient to form a mixture; and
micronizing the mixture to form particles.

### Example Embodiments

### Example 1. Preparation of Coated 1-Methylcyclopropene Tablets with Acid and Base in Same Microcapsule

A complex of 1-methylcyclopropene/α-cyclodextrin (3.3% by weight, 25 g), sodium bicarbonate (38 g), anhydrous citric acid (32 g), hydroxyethylcellulose (2 g), and magnesium stearate (3g) were blended and micronized. The powder thus obtained was coated with a 1% ethanolic solution of hydroxypropyl cellulose and dried in a spray dryer at 40 °C under nitrogen to yield granules (i.e., microcapsules).

The thus obtained granules (0.78 g) were then compressed in a tablet press under a force of 50 kN.

After making the tablets, they were placed in the drum of a coating machine, to which a 1% ethanolic solution of hydroxypropyl cellulose was dosed at a temperature of 40°C. After drying, tablets coated with a coating layer of 0.1 mm thickness were obtained.

### Example 2. Analysis of 1-Methylcyclopropene Content in 1-Methylcyclopropene/α-cyclodextrin Complex, Microcapsules/Granulate, and Tablets Before and After Coating

Analyses of 1-methylcyclopropene content and release profiles were made on a gas chromatograph (SHIMADZU Nexis GC-2030). A series of tests were carried out to determine the content of 1-MCP in tablets and to see how particular aspects of tablet construction affected the amount of 1-MCP in tablets.

The weight percentage of 1-MCP in three batches of 1-MCP/α-cyclodextrin complex used in production of the tablets are shown in Table 1 below.

**Table 1. 1-MCP Content in Various Batches of 1-MCP/α-cyclodextrin complex.**

| Batch number | 1-MCP [% w/w] | Methylenecycloprop ane isomer [% w/w] | 1-MCP as complex with α-cyclodextrin [% w/w] |
|---|---|---|---|
| 1 | 3.64 | 0.05 | 3.64 |
| 2 | 3.32 | 0.05 | 3.32 |
| 3 | 3.55 | 0.05 | 3.55 |

The 1-MCP content of microcapsules/granulate, uncoated tablets, and coated tablets are shown in Table 2 and Table 3.

**Table 2. Comparison of the 1-MCP Content in 1-MCP/α-Cyclodextrin Powder (Batch 2), Microcapsules/Granulate Prepared With Batch 2, and Uncoated Tablets Prepared with Batch 2.**

| Form | 1-MCP [% w/w] | Methylenecyclopro pane isomer [% w/w] | 1-MCP as complex with α-cyclodextrin [% w/w] |
|---|---|---|---|
| 1-MCP/α-cyclodextrin | 3.32 | 0.05 | 3.32 |
| Microcapsules/Granulate | 0.796 | 0.012 | 3.182 |
| Uncoated tablets | 0.774 | 0.012 | 3.096 |

**Table 3. Comparison of the 1-MCP Content in 1-MCP/α-Cyclodextrin Powder (Batch 3), Uncoated Tablets Prepared With Batch 3, and Coated Tablets Prepared with Batch 3.**

| Form | 1-MCP [% w/w] | Methylenecyclopropane isomer [% w/w] | 1-MCP as complex with α-cyclodextrin [% w/w] |
|---|---|---|---|
| Powder | 3.55 | 0.052 | 3.55 |
| Uncoated tablets | 0.726 | 0.012 | 2.903 |
| Film-coated tablets (Ex. 1) | 0.719 | 0.012 | 2.876 |

### Example 3. Preparation of Coated 1-Methylcyclopropene Tablets with Acid in Microcapsule and Base Coated Separately

1-Methylcyclopropene/α-cyclodextrin 3.3% by weight (25 g), anhydrous citric acid (32 g), hydroxyethylcellulose (2 g), and magnesium stearate (3 g) are blended and micronized. The powder thus obtained was coated with a 1% ethanol solution of hydroxypropyl cellulose and dried in a spray dryer at 40 °C under nitrogen flow to obtain microcapsules or granules.

Sodium bicarbonate (38 g) was coated with a 1% ethanol solution of hydroxypropyl cellulose and dried in a spray dryer at 40 °C under nitrogen flow to obtain microcapsules or granules.

64 g of microcapsules were mixed with 37 g of base-coated sodium bicarbonate in a powder cone mixer for 30 min to form a uniform mixture of microgranules.

The thus-obtained granules (0.78 g) were compressed in a tablet press under a force of 50 kN. After making the tablets, they were placed in the drum of the coating machine, to which a 1% ethanol solution of hydroxypropyl cellulose was dosed at a temperature of 40 °C. This way, tablets coated with a coating layer of 0.1 mm thickness were obtained.

Without wishing to be bound by theory, it has been found that coating the base particles separately improves stability of the tablets in storage.

### Example 4. Comparison of Release Profiles of Coated and Uncoated Tablets.

The release rates of 1-MCP from uncoated tablets prepared using 1-MCP/α-cyclodextrin powder batch 3 and batch 2 were measured. The results are shown in Table 4 and Table 5, respectively.

**Table 4. Release Rate of 1-MCP From Uncoated Tablets Produced Using 1-MCP/α-Cyclodextrin Powder Batch 3.**

| Time [h] | 1-MCP [% w/w] | Methylenecyclopropane isomer [% w/w] | 1-MCP as complex with α-cyclodextrin [% w/w] |
|---|---|---|---|
| 1 | 0.924 | 0.014 | 3.697 |
| 5 | 0.928 | 0.014 | 3.713 |

**Table 5. Release Rate of 1-MCP From Uncoated Tablets Produced Using 1-MCP/α-Cyclodextrin Powder Batch 2.**

| Time | 1-MCP [% w/w] | Methylenecyclopropane isomer [% w/w] | 1-MCP as complex with α-cyclodextrin [% w/w] |
|---|---|---|---|
| 1 day | 0.774 | 0.012 | 3.096 |
| 1 week | 0.721 | 0.012 | 2.882 |
| 2 weeks | 0.662 | 0.011 | 2.649 |
| 3 weeks | 0.394 | 0.007 | 1.578 |
| 4 weeks | 0.364 | 0.007 | 1.454 |

The release rates of 1-MCP from film-coated tablets prepared using 1-MCP/□-cyclodextrin powder batch 3 were measured. The results are shown in Table 6.

**Table 6. Release Rate of 1-MCP From Film-Coated Tablets Produced Using 1-MCP/α-Cyclodextrin Powder Batch 3.**

| Time | 1-MCP [% w/w] | Methylenecyclopropane isomer [% w/w] | 1-MCP as complex with α-cyclodextrin [%w/w] |
|---|---|---|---|
| 1 day | 0.719 | 0.012 | 2.876 |
| 1 week | 0.733 | 0.012 | 2.930 |
| 2 weeks | 0.734 | 0.011 | 2.938 |
| 4 weeks | 0.724 | 0.012 | 2.897 |
| 2 months | 0.734 | 0.012 | 2.938 |

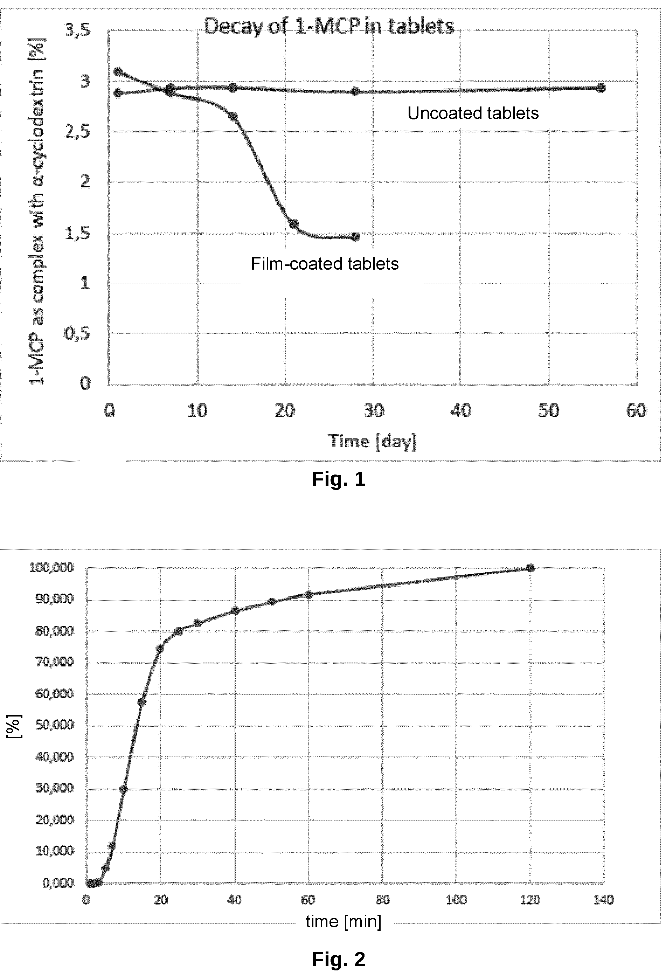

FIG. 1 is a plot of the weight percentage of 1-MCP in the 1-MCP/α-cyclodextrin complex present in an uncoated tablet and a film-coated tablet (Example 1) measured over time. Table 5, Table 6, and FIG. 1 show that substantially no change in 1-MCP content in a film-coated tablet occurs over about 57 days, while the uncoated tablet released greater than half of its 1-MCP over about 28 days. Tablets were stored at room temperature and 36% humidity in a closed plastic container.

The film-coated tablet (Example 1) was placed in liquid water, and the total percentage of 1-MCP released from the tablet was measured at various time points after contact of the tablet with water. FIG. 2 is a plot of the total percentage of 1-MCP released from the film-coated tablet vs. time. FIG. 2 shows that after contact, substantially no 1-MCP is released for about 2 minutes, followed by release of the 1-MCP until 100% is released after 120 minutes.

### Example 5. Release Profiles of Tablets with Varying Proportions of 1-MCP/α-Cyclodextrin Powder, Sodium Bicarbonate and Citric Acid.

The release rates of 1-MCP from film-coated tablets prepared using 1-MCP/α-cyclodextrin powder with varying proportions of 1-MCP/α-cyclodextrin powder, sodium bicarbonate and citric acid were measured. The film-coated tablets were placed in liquid water, and the total percentage of 1-MCP released from the tablet was measured at various time points after contact of the tablet with water.

The amounts of 1-MCP/α-cyclodextrin powder, sodium bicarbonate and citric acid for these samples is listed in Table 7. Each sample in Table 7 also contained 2% by weight hydroxyethylcellulose and 3% by weight magnesium stearate. The tablets were spray-coated with a solution of hydroxypropylcellulose in ethanol to reach coating thickness between 0.01 and 3 mm.

**Table 7.**

| Sample | % w/w 1-MCP/α-cyclodextrin powder | % w/w sodium bicarbonate | % w/w citric acid |
|---|---|---|---|
| 5A | 25 | 38 | 32 |
| 5B | 2.5 | 50.2 | 42.3 |
| 5C | 55 | 30 | 10 |
| 5D | 35 | 30 | 30 |
| 5E | 55 | 10 | 30 |

### Example 6. Release Profile of Tablet with Sodium Carbonate Base.

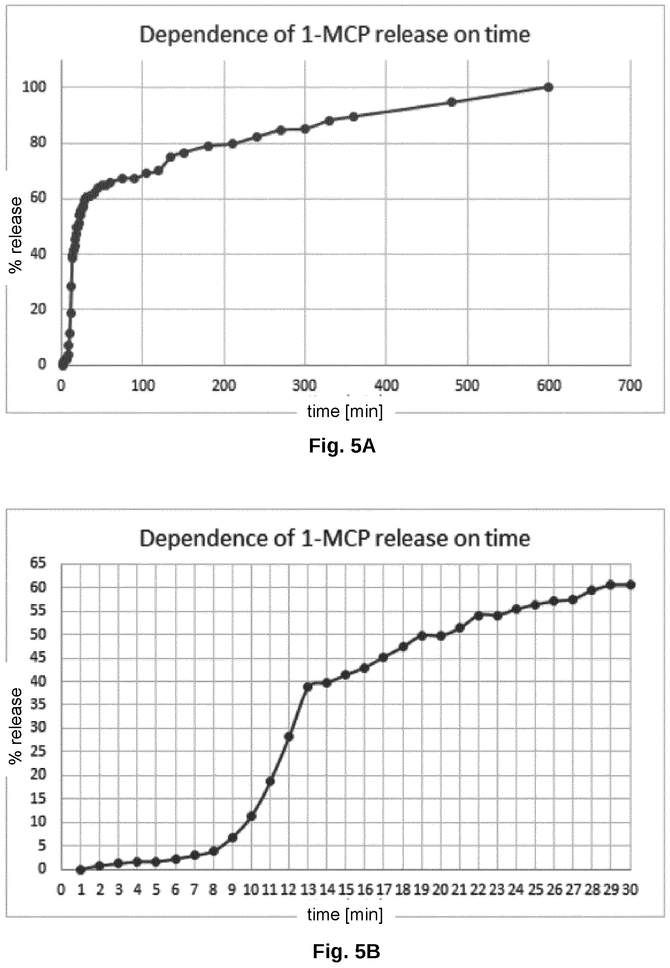

The release rate of 1-MCP from a film-coated tablet prepared using 1-MCP/α-cyclodextrin powder, sodium carbonate, citric acid, hydroxyethylcellulose, and magnesium stearate was measured. The film-coated tablet was placed in liquid water, and the total percentage of 1-MCP released from the tablet was measured at various time points after contact of the tablet with water. The tablet was spray-coated with a solution of hydroxypropylcellulose in ethanol to reach a coating thickness between 0.01 and 3 mm. The tablet formulation is listed in Table 8. The release profile is shown in Fig. 5A, and the release profile for the first 30 minutes after contact with water is shown in Fig. 5B. After 10 hours, 100% of the 1-MCP in the tablet had been released.

**Table 8. Formulation of Example 6 Tablet.**

| Tablet Component | % [w/w] |
|---|---|
| 1-MCP as complex with α-cyclodextrin | 25 |
| Sodium carbonate | 38 |
| Citric acid, anhydrous | 32 |
| Hydroxyethyl cellulose | 2 |
| Magnesium stearate | 3 |

### Example 7. Release Profile of Tablet with Polyvinylpolypyrrolidone.

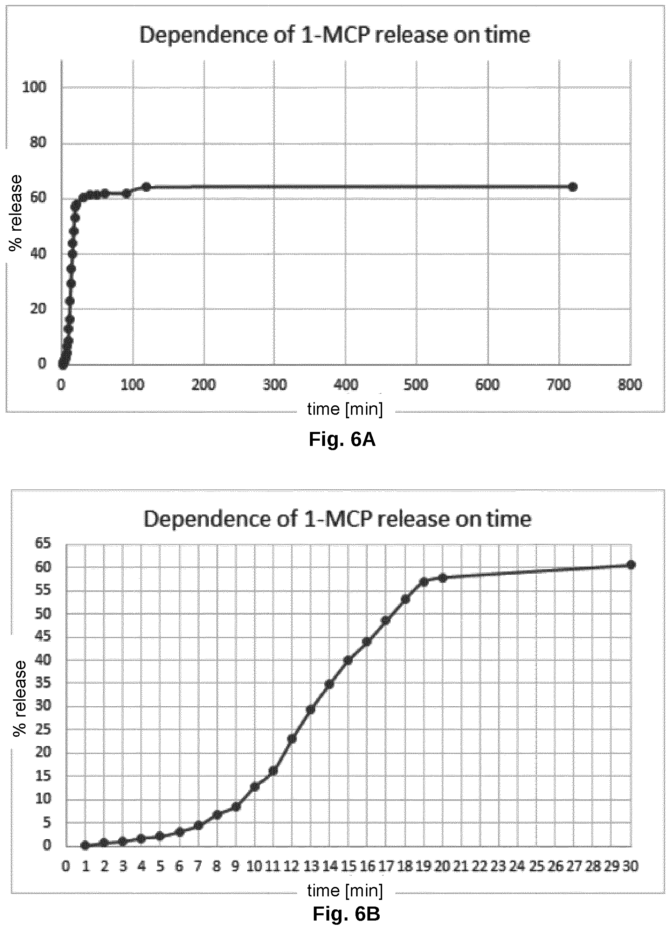

The release rate of 1-MCP from a film-coated tablet prepared using 1-MCP/α-cyclodextrin powder, sodium carbonate, citric acid, hydroxyethylcellulose, magnesium stearate, and polyvinylpyrrolidone was measured. The film-coated tablet was placed in liquid water, and the total percentage of 1-MCP released from the tablet was measured at various time points after contact of the tablet with water. The tablet was spray-coated with a solution of hydroxypropylcellulose in ethanol to reach a coating thickness between 0.01 and 3 mm. The tablet formulation is listed in Table 9. The release profile is shown in Fig. 6A, and the release profile for the first 30 minutes after contact with water is shown in Fig. 6B. After 12 hours, 64% of the 1-MCP in the tablet had been released.

**Table 9. Formulation of Example 7 Tablet.**

| Name of the component | % [w/w] |
|---|---|
| 1-MCP as complex with α-cyclodextrin | 25 |
| Sodium carbonate | 36 |
| Citric acid, anhydrous | 31 |
| Hydroxyethyl cellulose | 2 |
| Magnesium stearate | 3 |
| Polyvinylpolypyrrolidone | 3 |

### Example 8. Release Profile of Tablet with Sodium Croscarmellose.

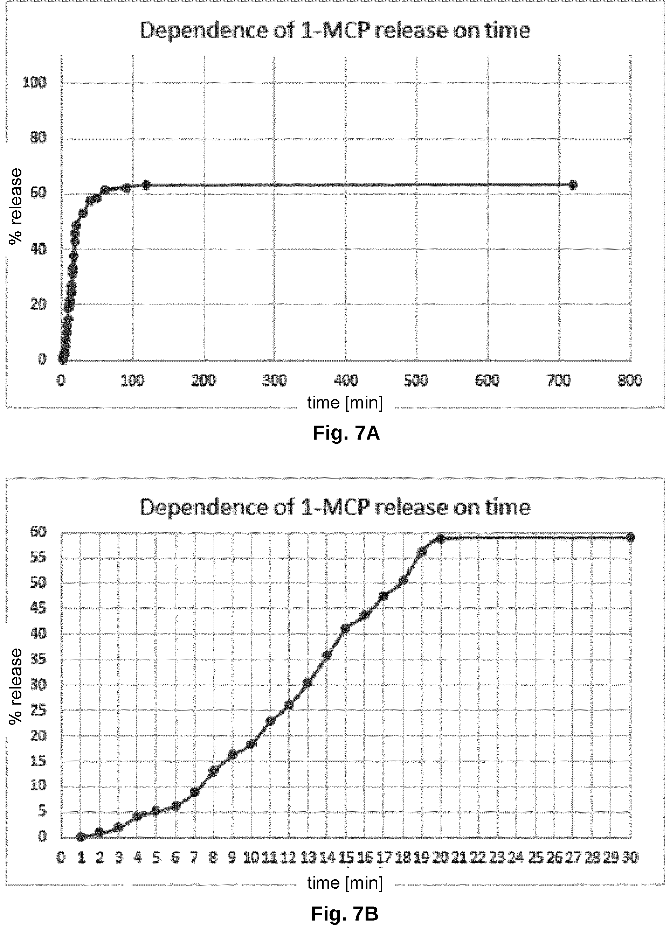

The release rate of 1-MCP from a film-coated tablet prepared using 1-MCP/α-cyclodextrin powder, sodium carbonate, citric acid, hydroxyethylcellulose, magnesium stearate, and sodium croscarmellose was measured. The film-coated tablet was placed in liquid water, and the total percentage of 1-MCP released from the tablet was measured at various time points after contact of the tablet with water. The tablet was spray-coated with a solution of hydroxypropylcellulose in ethanol to reach a coating thickness between 0.01 and 3 mm. The tablet formulation is listed in Table 10. The release profile is shown in Fig. 7A, and the release profile for the first 30 minutes after contact with water is shown in Fig. 7B. After 12 hours, 61% of the 1-MCP in the tablet had been released.

**Table 10. Formulation of Example 8 Tablet.**

| Tablet Component | % [w/w] |
|---|---|
| 1-MCP as complex with α-cyclodextrin | 25 |
| Sodium carbonate | 36 |
| Citric acid, anhydrous | 31 |
| Hydroxyethyl cellulose | 2 |
| Magnesium stearate | 3 |
| Sodium croscarmellose | 3 |

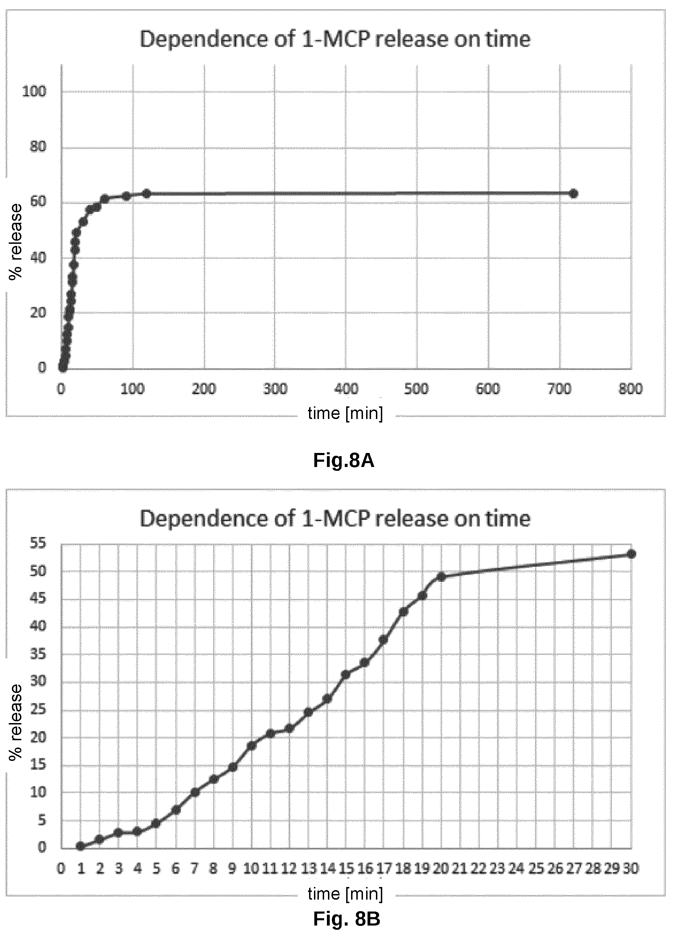

**Example 9. Release Profile of Tablet with Sodium Dodecyl Sulfate.** The release rate of 1-MCP from a film-coated tablet prepared using 1-MCP/α-cyclodextrin powder, sodium carbonate, citric acid, hydroxyethylcellulose, magnesium stearate, and sodium dodecyl sulfate was measured. The film-coated tablet was placed in liquid water, and the total percentage of 1-MCP released from the tablet was measured at various time points after contact of the tablet with water. The tablet was spray-coated with a solution of hydroxypropylcellulose in ethanol to reach a coating thickness between 0.01 and 3 mm. The tablet formulation is listed in Table 11. The release profile is shown in Fig. 8A, and the release profile for the first 30 minutes after contact with water is shown in Fig. 8B. After 12 hours, 63% of the 1-MCP in the tablet had been released.

**Table 11. Formulation of Example 9 Tablet.**

| Tablet Component | % [w/w] |
|---|---|
| 1-MCP as complex with α-cyclodextrin | 25 |
| Sodium carbonate | 36 |
| Citric acid, anhydrous | 31 |
| Hydroxyethyl cellulose | 2 |
| Magnesium stearate | 3 |
| Sodium dodecyl sulfate | 3 |

### Example 10. Release Profile of Tablets with Coated Sodium Bicarbonate.

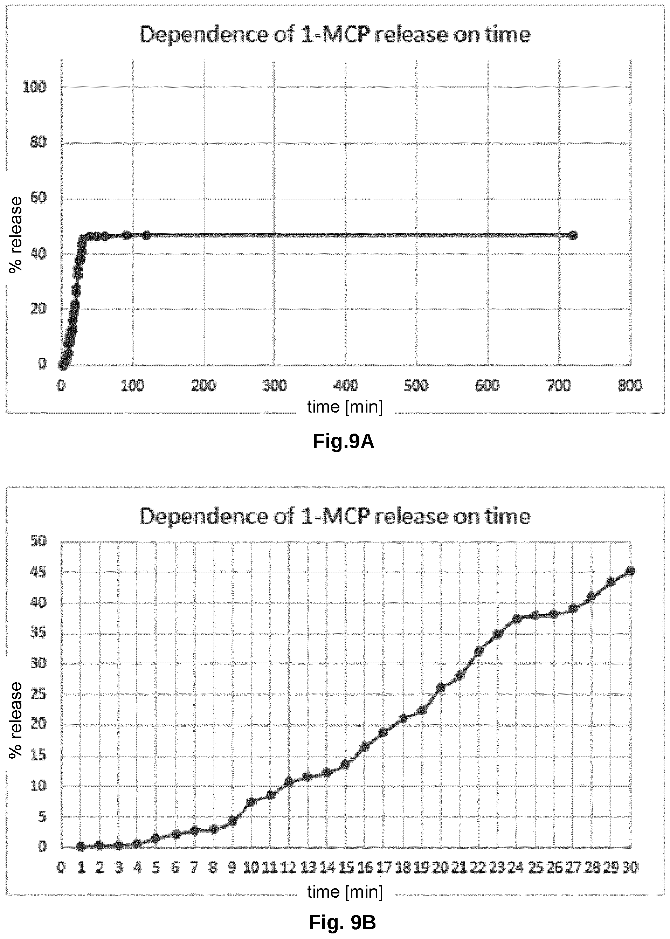

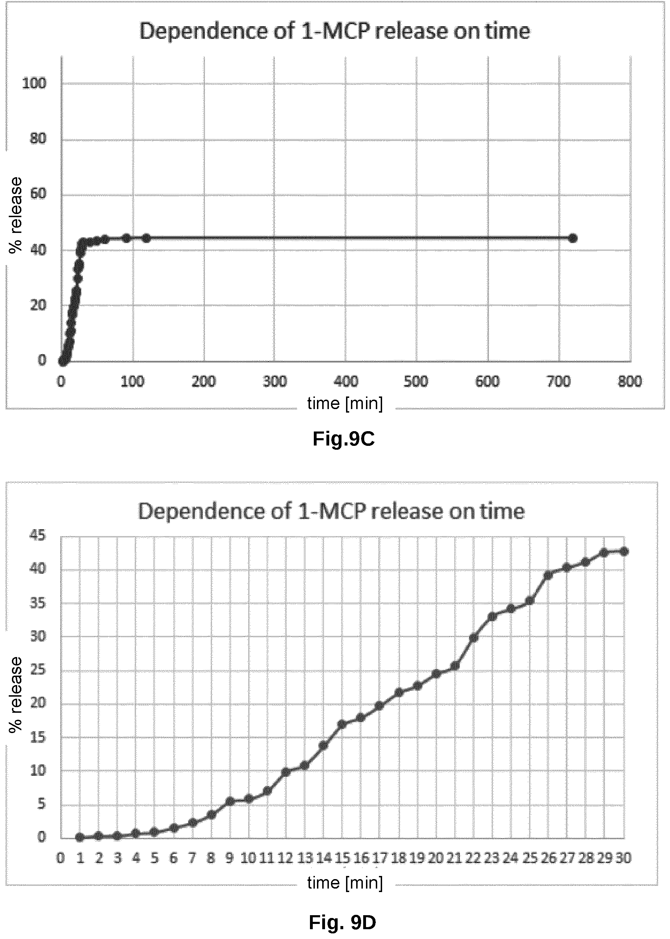

The release rate of 1-MCP from film-coated tablets prepared using 1-MCP/α-cyclodextrin powder, sodium bicarbonate coated with hydroxypropyl cellulose, citric acid, hydroxyethylcellulose, and magnesium stearate were measured. The film-coated tablets were placed in liquid water, and the total percentage of 1-MCP released from each tablet was measured at various time points after contact of the tablet with water. The tablets were spray-coated with a solution of hydroxypropylcellulose in ethanol to reach a coating thickness between 0.01 and 3 mm. The tablet formulations are listed in Tables 12 (Tablet 1) and 13 (Tablet 2). The release profiles are shown in Figs. 9A-D. After 12 hours, 47% of the 1-MCP had been released from Tablet 1, and 45% of the 1-MCP had been released from Tablet 2.

**Table 12. Formulation of Example 10 Tablet 1.**

| Tablet Component | % [w/w] |
|---|---|
| 1-MCP as complex with α-cyclodextrin | 25 |
| Sodium bicarbonate coated with hydroxypropyl cellulose | 40 |
| Citric acid, anhydrous | 32 |
| Magnesium stearate | 3 |

**Table 13. Formulation of Example 10 Tablet 2.**

| Tablet Components | % [w/w] |
|---|---|
| 1-MCP as complex with α-cyclodextrin | 25 |
| Sodium bicarbonate coated with hydroxypropyl cellulose | 38 |
| Citric acid, anhydrous | 32 |
| Hydroxyethyl cellulose | 2 |
| Magnesium stearate | 3 |

### Example 11. Release Profile of Tablet with Hydroxyethyl cellulose, Magnesium Stearate, and.

The release rate of 1-MCP from a film-coated tablet prepared using 1-MCP/α-cyclodextrin powder, sodium bicarbonate, citric acid, hydroxyethylcellulose, magnesium stearate, and hydroxypropyl cellulose was measured. To make the tablet, 1-methylcyclopropene in complex with α-cyclodextrin (approximately 3.3% by weight 1-MCP) (23.64% w/w of 1-MCP/α-CD complex), sodium bicarbonate (36.86% w/w), anhydrous citric acid (31.65% w/w), hydroxyethyl cellulose (1.94% w/w), magnesium stearate (2.91% w/w) were blended together and micronized in a double cone blender. The resulting powder was coated in a 1% isopropanol solution of hydroxypropyl cellulose and dried to obtain microcapsules. The thus obtained granules were compressed in a tablet press under a force of 50 kN. The tablet was then coated with hydroxypropyl cellulose using a 1% ethanol solution of hydroxypropyl cellulose to a thickness of 0.1 mm thickness. The tablet formulation is listed in Table 14.

**Table 14. Formulation of Example 11 Tablet.**

| Tablet Component | % [w/w] |
|---|---|
| 1-MCP as complex with α-cyclodextrin | 24.25 |
| Sodium bicarbonate | 36.86 |
| Citric acid, anhydrous | 31.04 |
| Hydroxyethyl cellulose | 1.94 |
| Magnesium stearate | 2.91 |
| Hydroxypropyl cellulose | 3 |

The film-coated tablet was placed in liquid water, and the total percentage of 1-MCP released from the tablet was measured at various time points after contact of the tablet with water. The release profile is shown in Fig. 10A, and the release profile for the first 30 minutes after contact with water is shown in Fig. 10B. After 6 hours, 100% of the 1-MCP had been released from the tablet.

A number of embodiments of the invention have been described. Nevertheless, it will be understood that various modifications may be made without departing from the spirit and scope of the invention. Accordingly, other embodiments are within the scope of the following claims.

## Claims

1. A film-coated tablet comprising:
(a) a tablet core with an acid and a base, the tablet core comprising a plurality of microcapsules, wherein the microcapsules comprise (i) a microcapsule core, comprising a complex of 1-methylcyclopropene and α-cyclodextrin, the acid, and an excipient; and (ii) a microcapsule layer surrounding the microcapsule core, wherein the microcapsule layer comprises a first polymer; and
(b) a tablet layer surrounding the tablet core, wherein the tablet layer comprises a second polymer.

2. The film-coated tablet of claim 1, wherein the base is comprised in the microcapsule core.

3. The film-coated tablet of claim 1, wherein the base is separate from the microcapsule core.

4. The film-coated tablet of any one of claims 1-3, wherein the weight percentage of 1-methylcyclopropene in the microcapsule core is from about 0.1% to about 4%, and wherein the thickness of the tablet layer is from about 0.01 mm to about 0.5 mm, preferably about 0.1 mm.

5. The film-coated tablet of any one of claims 1-4, wherein the acid is selected from the group consisting of: citric acid, tartaric acid, fumaric acid, salicylic acid, oxalic acid, succinic acid, maleic acid, malic acid, glycolic acid, glutaric acid, gluconic acid, and combinations thereof, preferably wherein the acid is citric acid, and wherein preferably the weight percentage of the acid in the microcapsule core is from about 10% to about 70%, preferably about 32%.

6. The film-coated tablet of any one of claims 1-5, wherein the excipient is selected from the group consisting of: hydroxyalkylcellulose, magnesium stearate, sodium citrate, dicalcium phosphate, a starch, lactose, sucrose, glucose, mannitol, silicic acid, carboxymethylcellulose, an alginate, gelatin, polyvinylpyrrolidone, polyvinylpolypyrrolidone, sodium croscarmellose, acacia, calcium carbonate, alginic acid, silicate, sodium carbonate, kaolin, bentonite clay, talc, calcium stearate, a polyethylene glycol, and combinations thereof, preferably wherein the excipient is hydroxyethylcellulose and magnesium stearate and wherein preferably the weight percentage of the excipient in the microcapsule core is from about 2% to about 15%, preferably about 5%.

7. The film-coated tablet of any one of claims 1-6, wherein at least one of the first polymer or the second polymer is water soluble.

8. The film-coated tablet of any one of claims 1-7, wherein the first polymer is selected from the group consisting of: a hydroxyalkyl cellulose, poly(ethylene glycol), polyvinylpyrrolidone, polyvinylpolypyrrolidone, polyvinyl alcohol, polyacrylic acid, a polyacrylamide, N-(2-hydroxypropyl)methacrylamide, divinyl ether-maleic anhydride, polyoxazoline, a polyphosphate, a polyphosphazene, xanthan gum, a pectin, a dextran, carrageenan, sodium carboxymethylcellulose, sodium croscarmellose, hyaluronic acid, albumin, and combinations thereof, preferably wherein the first polymer is hydroxypropyl cellulose.

9. The film-coated tablet of any one of claims 1-8, wherein the second polymer is selected from the group consisting of: hydroxyalkyl cellulose, poly(ethylene glycol), polyvinylpyrrolidone, polyvinylpolypyrrolidone, polyvinyl alcohol, polyacrylic acid, a polyacrylamide, N-(2-hydroxypropyl)methacrylamide, divinyl ether-maleic anhydride, polyoxazoline, a polyphosphate, a polyphosphazene, xanthan gum, a pectin, a dextran, carrageenan, sodium carboxymethylcellulose, sodium croscarmellose, hyaluronic acid, albumin, and combinations thereof, preferably wherein the second polymer is hydroxypropyl cellulose and wherein preferably the weight percentage of the second polymer in the film-coated tablet is about 2% to about 3%.

10. The film-coated tablet of any one of claims 1-9, wherein the base is selected from the group consisting of: sodium bicarbonate, potassium bicarbonate, calcium carbonate, sodium carbonate, potassium carbonate, sodium glycine carbonate, sodium potassium carbonate, and combinations thereof, preferably wherein the base is sodium bicarbonate.

11. The film-coated tablet of any one of claims 1-10, wherein the base is surrounded by a coating.

12. The film-coated tablet of claim 11, wherein the coating comprises hydroxyalkyl cellulose, poly(ethylene glycol), polyvinylpyrrolidone, polyvinylpolypyrrolidone, polyvinyl alcohol, polyacrylic acid, a polyacrylamide, N-(2-hydroxypropyl)methacrylamide, divinyl ether-maleic anhydride, polyoxazoline, a polyphosphate, a polyphosphazene, xanthan gum, a pectin, a dextran, carrageenan, sodium carboxymethylcellulose, sodium croscarmellose, hyaluronic acid, albumin, or combinations thereof, preferably wherein the coating comprises hydroxypropyl cellulose.

13. The film-coated tablet of claim 2, wherein the acid is citric acid, the base is sodium bicarbonate, the excipient is a combination of hydroxyethyl cellulose and magnesium stearate, and the first polymer is hydroxypropyl cellulose, and wherein the weight percentage of citric acid in the tablet is 31.04%, the weight percentage of sodium bicarbonate in the tablet is 36.86%, the weight percentage of 1-MCP in complex with α-cyclodextrin is 24.25%, the weight percentage of hydroxyethyl cellulose is 1.94%, the weight percentage of magnesium stearate is 2.91%, and the weight percentage of hydroxypropyl cellulose is 3%.

14. The film-coated tablet of any one of claims 1-13, wherein the film-coated tablet is capable of releasing the 1-methylcyclopropene in the form of a gas when exposed to water, the tablet having a release profile **characterized in that** when exposed to water, the tablet releases substantially no 1-methylcyclopropene after a first time period of at least 1 minute after exposure to the water; and the film-coated tablet releases 1-methylcyclopropene over a second time period that starts after the first time period, wherein the second time period is about 120 minutes.

15. A method of inhibiting an ethylene response in a plant, comprising:
(a) contacting the film-coated tablet of any one of claims 1-14 with water to release gaseous 1-methylcyclopropene; and
(b) contacting the 1-methylcyclopropene with the plant.

16. A method of preserving the freshness of a plant, comprising:
(a) contacting the film-coated tablet of any one of claims 1-14 with water to release gaseous 1-methylcyclopropene; and
(b) contacting the 1-methylcyclopropene with the plant.

17. A method of preserving the freshness of a plant, comprising:
(a) placing the plant inside an enclosed space; and
(b) contacting the film-coated tablet of any one of claims 1-14 with water inside the enclosed space.

18. The method of any one of claims 15-17, wherein the plant is a fruit or vegetable, a flower cut at the stem, or wherein the plant is planted in a pot.
